(19) Europäisches Patentamt
European Patent Office
Office européen des brevets

(11) EP 3 862 255 B1

(12) **EUROPEAN PATENT SPECIFICATION**

(45) Date of publication and mention of the grant of the patent:
**04.01.2023 Bulletin 2023/01**

(21) Application number: **19874509.3**

(22) Date of filing: **17.10.2019**

(51) International Patent Classification (IPC):
***B60Q 1/50*** *(2006.01)* ***B60W 40/09*** *(2012.01)*
***G09B 9/058*** *(2006.01)* ***B62H 7/00*** *(2006.01)*
***B62J 6/26*** *(2020.01)*

(52) Cooperative Patent Classification (CPC):
**B62J 45/415; B60Q 1/50; B60W 40/09; B62H 7/00; B62J 6/26; G09B 9/058;** B60W 2050/0054; B60W 2050/0056; B60W 2300/36; B60W 2520/14; B60W 2520/16; B60W 2520/18

(86) International application number:
**PCT/JP2019/040998**

(87) International publication number:
**WO 2020/080500 (23.04.2020 Gazette 2020/17)**

(54) **LEANING VEHICLE RUNNING-STATE LIGHT EMITTING DEVICE FOR EMITTING LIGHT CORRESPONDING TO CLASS OF RUNNING STATE OF LEANING VEHICLE**

LICHTEMITTIERENDE VORRICHTUNG FÜR NEIGEFAHRZEUG IM FAHRZUSTAND ENTSPRECHEND DER KLASSE DES FAHRZUSTANDS EINES NEIGEFAHRZEUGS

DISPOSITIF ÉLECTROLUMINESCENT D’ÉTAT DE DÉPLACEMENT DE VÉHICULE INCLINABLE DESTINÉ À ÉMETTRE DE LA LUMIÈRE CORRESPONDANT À UNE CLASSE D’ÉTAT DE DÉPLACEMENT DE VÉHICULE INCLINABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2018 JP 2018197061**

(43) Date of publication of application:
**11.08.2021 Bulletin 2021/32**

(73) Proprietor: **Yamaha Hatsudoki Kabushiki Kaisha**
**Iwata-shi, Shizuoka 438-8501 (JP)**

(72) Inventor: **HARADA, Yoshinori**
**Iwata-shi, Shizuoka 438-8501 (JP)**

(74) Representative: **Stöckeler, Ferdinand**
**Schoppe, Zimmermann, Stöckeler**
**Zinkler, Schenk & Partner mbB**
**Patentanwälte**
**Radlkoferstrasse 2**
**81373 München (DE)**

(56) References cited:
**EP-A1- 3 219 567**
**WO-A1-2011/077638**
**WO-A1-2013/099246**
**WO-A1-2018/001588**
**JP-A- 2001 088 760**
**JP-A- 2004 021 076**
**JP-A- 2015 071 330**
**JP-A- 2017 191 225**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 862 255 B1

## Description

### TECHNICAL FIELD

The present teaching relates to a leaning vehicle running-state light-emitting device that emits light corresponding to a class of a leaning vehicle running state.

### BACKGROUND ART

In a class for teaching driving skills, an event, or other situations, if there is a device that determines a running state, including a turning state, of a leaning vehicle and enables a driver or a participant of the event to visually recognize a result of the determination, the driver or the participant of the event, for example, can recognize situations such as a current driving skill.

There are leaning vehicles whose operating state can be visually recognized, such as instruction vehicles. Patent Document 1 (Japanese Patent Application Publication No. 2004-21076), for example, discloses an instruction vehicle that displays the number of gear stages, a speed, an engine stall, and other parameters, with lamps.

Patent Document 2 (EP 3 219 567 A1) shows a light emitting device with the features of the preamble of claim 1.

### CITATION LIST

### PATENT DOCUMENT

Patent Document 1: Japanese Patent Application Publication No. 2004-21076

Patent document 2: EP 3 219 567 A1

### SUMMARY OF INVENTION

### PROBLEMS TO BE SOLVED BY INVENTION

The instruction vehicle, however, can display only limited operating states such as the number of gear stages, the speed, and the engine stall.

A running state, including a turning state, of a leaning vehicle is information a driver or an event participant wants to know. The instruction vehicle described above, however, cannot display a running state, including a turning state, of a leaning vehicle.

This causes a demand for a device that determines a running state, including a turning state, of a leaning vehicle and enables a user to visually recognize a result of the determination in real time. In particular, there has been a demand for a device that enables a user to visually recognize a running state, including a turning state, of a leaning vehicle in real time based on data detected by a leaning vehicle posture data detector, such as a gyro sensor, mounted on the leaning vehicle.

It is therefore an object of the present teaching to provide a leaning vehicle running-state light-emitting device that classifies a running state, including a turning state, of a leaning vehicle into a plurality of leaning vehicle running-state classes by using data detected by a leaning vehicle posture data detector mounted on the leaning vehicle and that emits light corresponding to these classes.

### SOLUTION TO PROBLEM

The inventor of the present teaching studied a device that enables a user to visually recognize, in real time, a driving skill or the like obtained based on a running state, including a turning state, of a leaning vehicle. In recognizing a running state, including a turning state, of a leaning vehicle by using data detected by a leaning vehicle posture data detector, such as a gyro sensor, mounted on the leaning vehicle, a large amount of data is used for recognizing the running state of the leaning vehicle. The inventor of the present teaching found it difficult for a driver or an event participant to recognize how the data is associated with the running state of the leaning vehicle if the data is output as it is in real time.

In addition, the inventor also found it effective to display a driving skill by using a light-emitting device in order to enable the driver or the event participant to visually recognize, in real time, a driving skill obtained based on the running sate of the leaning vehicle.

In view of this, the inventor studied a technique for displaying a running state, including a turning state, of a leaning vehicle by using a light-emitting device. As a result, the inventor found that the running state, including the turning state, of the leaning vehicle is classified into a plurality of leaning vehicle running-state classes by using data detected by a leaning vehicle posture data detector, such as a gyro sensor, mounted on the leaning vehicle, and the type of light that is emitted from the light-emitting device and can be visually recognized is classified depending on each of the classes.

Through the study, the inventor has arrived at the following configurations.

A leaning vehicle running-state light-emitting device that emits light corresponding to a leaning vehicle running-state class according to an embodiment of the present teaching includes: a case disposed on a vehicle body of a leaning vehicle and located at the rear of a driver seated on a seat of the leaning vehicle; a light emitter housed in the case and including a light source configured to emit light in at least the left, right, and rear directions with respective to the leaning vehicle; a leaning vehicle running-state class data receiver which is housed in the case and to which leaning vehicle running-state class data is input, the leaning vehicle running-state class data being obtained by classifying data concerning a running state, including a turning state, of the leaning vehicle into a plurality of running state classes; and an illumination controller housed in the case and configured to control illumination of the light source based on the leaning vehicle running-state class data input to the leaning vehicle running-state class data receiver during traveling of the leaning vehicle.

The leaning vehicle running-state class data, obtained by classifying data concerning a running state, including a turning state, of the leaning vehicle into a plurality of leaning vehicle running-state classes, is input to the leaning vehicle running-state class data receiver. Based on the leaning vehicle running-state class data input to the leaning vehicle running-state class data receiver, the illumination controller controls illumination of the light source of the light emitter. As described above, the leaning vehicle running-state light-emitting device causes the light emitter to emit light to thereby enable a driver or an event participant to visually recognize, for example, a driving skill obtained based on the running state, including the turning state, of the leaning vehicle without complicated display control or the like. The leaning vehicle running-state light-emitting device causes the light emitter to emit light based on a leaning vehicle running-state class as described above to thereby simplify the display of the leaning vehicle running-state class, as compared to the case of outputting data concerning the running state of the leaning vehicle as it is.

In another aspect, the leaning vehicle running-state light-emitting device that emits light corresponding to a leaning vehicle running-state class according to the present teaching preferably includes the following configuration.

The leaning vehicle running-state light-emitting device that emits light corresponding to a leaning vehicle running-state class according to the present teaching further includes: a leaning vehicle posture data detector configured to detect, as leaning vehicle posture data, at least one of a physical quantity related to a yaw angle, a physical quantity related to a roll angle, or a physical quantity related to a pitch angle in the leaning vehicle, while the leaning vehicle is running; and a leaning vehicle running-state class data generator configured to generate the leaning vehicle running-state class data obtained by classifying data concerning the running state, including the turning state, of the leaning vehicle into a plurality of leaning vehicle running-state classes, based on the leaning vehicle posture data detected by the leaning vehicle posture data detector, wherein the leaning vehicle running-state class data generated by the leaning vehicle running-state class data generator is input to the leaning vehicle running-state class data receiver.

The leaning vehicle running-state class data generator generates leaning vehicle running-state class data obtained by classifying data concerning a running state, including a turning state, of the leaning vehicle into a plurality of running state classes, based on leaning vehicle posture data detected by the leaning vehicle posture data detector. The leaning vehicle running-state class data generator outputs the generated leaning vehicle running-state class data to the leaning vehicle running-state class data receiver. The illumination controller controls illumination of the light source of the light emitter based on the leaning vehicle running-state class data input to the leaning vehicle running-state class data receiver. As described above, the light emitter is caused to emit light based on a leaning vehicle running-state class so that the leaning vehicle running-state light-emitting device thereby enables a driver or an event participant to visually recognize the leaning vehicle running-state class such as a driving skill based on a running state, including a turning state, of the leaning vehicle without complicated display control or the like. In addition, as described above, the light emitter is caused to emit light based on a leaning vehicle running-state class so that display of a leaning vehicle running-state can be thereby simplified, as compared to the case of displaying running state data of the leaning vehicle as it is. Furthermore, the leaning vehicle running-state light-emitting device causes the light emitter to emit light based on the leaning vehicle running-state class as described above to thereby easily control light emission of the light emitter.

In another aspect, the leaning vehicle running-state light-emitting device that emits light corresponding to a leaning vehicle running-state class according to the present teaching preferably includes the following configuration.

The leaning vehicle running-state class data generator determines a driving skill based on the leaning vehicle posture data detected by the leaning vehicle posture data detector, and classifies the determined driving skill into a plurality of leaning vehicle running-state classes based on a driving determination criterion to thereby generate the leaning vehicle running-state class data.

The leaning vehicle running-state class data generator determines a driving skill and classifies the determined driving skill into a plurality of leaning vehicle running-state classes based on a driving determination criterion to thereby generate the leaning vehicle running-state class data. Thus, leaning vehicle running-state class data corresponding to a driving skill of a driver can be obtained. Accordingly, a driver or a participant on a seat of an event site, for example, can visually recognize, in real time, a leaning vehicle running-state class corresponding to a driving skill of the driver based on a light-emission state of the light emitter.

In another aspect, the leaning vehicle running-state light-emitting device that emits light corresponding to a leaning vehicle running-state class according to the present teaching preferably includes the following configuration.

The leaning vehicle running-state class data generator obtains at least one of a smooth movement degree or a nimble movement degree based on the leaning vehicle posture data detected by the leaning vehicle posture data detector, determines a driving skill based on the obtained degree, and classifies the determined driving skill into a plurality of leaning vehicle running-state classes based on a driving determination criterion to thereby generate the leaning vehicle running-state class data.

The leaning vehicle running-state class data generator obtains at least one of the smooth movement degree or the nimble movement degree to determine the driving skill. Thus, a participant on a seat of an event side, for example, can visually recognize a leaning vehicle running-state class corresponding to a characteristic of a driver.

In another aspect, the leaning vehicle running-state light-emitting device that emits light corresponding to a leaning vehicle running-state class according to the present teaching preferably includes the following configuration. The illumination controller changes a light-emission mode of the light source of the light emitter based on the leaning vehicle running-state class data.

Accordingly, the light-emission mode of the light emitter can be changed based on the leaning vehicle running-state class. A driver or an event participant can visually recognize the leaning vehicle running-state class depending on the light-emission mode of the light emitter, and thus, can easily confirm the leaning vehicle running-state class of the driver.

In another aspect, the leaning vehicle running-state light-emitting device that emits light corresponding to a leaning vehicle running-state class according to the present teaching preferably includes the following configuration. The illumination controller changes a color of visible light emitted from the light source of the light emitter to thereby change a light-emission mode of the light source of the light emitter.

Accordingly, the color of visible light emitted from the light emitter can be changed based on the leaning vehicle running-state class. A driver or an event participant can visually recognize the leaning vehicle running-state class depending on the color of visible light emitted from the light emitter, and thus, can easily confirm the leaning vehicle running-state class of the driver.

In another aspect, the leaning vehicle running-state light-emitting device that emits light corresponding to a leaning vehicle running-state class according to the present teaching preferably includes the following configuration. The light emitter includes a plurality of light sources configured to emit visible light of different colors, and the illumination controller selects one of the plurality of light sources that emits light, based on the leaning vehicle running-state class data.

Accordingly, the light sources that emit visible light of different colors in the light emitter can be changed based on the leaning vehicle running-state class. Consequently, a driver or an event participant can visually recognize the leaning vehicle running-state class based on the color of visible light emitted from the light source.

In another aspect, the leaning vehicle running-state light-emitting device that emits light corresponding to a leaning vehicle running-state class according to the present teaching preferably includes the following configuration. The case includes a detector housing part configured to house the leaning vehicle posture data detector.

With this configuration, in the leaning vehicle running-state light-emitting device, the leaning vehicle posture data detector can be easily housed in the case.

In another aspect, the leaning vehicle running-state light-emitting device that emits light corresponding to a leaning vehicle running-state class according to the present teaching preferably includes the following configuration. The leaning vehicle running-state light-emitting device further includes: a holding member located between a rear seat and the case and having a rigidity higher than a rigidity of the rear seat, the rear seat being disposed on the vehicle body at the rear of the seat; and the case is attached to the rear seat to be above the rear seat, with the holding member interposed between the case and the rear seat.

Since the holding member having a rigidity higher than that of the rear seat is disposed between the case and the rear seat, strength necessary for attaching the case to the rear seat can be obtained.

In addition, in the leaning vehicle running-state light-emitting device, the case is attached to the rear seat to be above the rear seat, with the holding member interposed therebetween to thereby reduce vibrations applied to the leaning vehicle posture data detector. Accordingly, inclusion of noise caused by the vibrations in data detected by the leaning vehicle posture data detector can be suppressed.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having", and variations thereof when used in this specification, specify the presence of stated features, steps, operations, elements, components, and/or their equivalents but do not preclude the presence or addition of one or more other features, steps, operations, elements, components, and/or groups thereof.

It will be further understood that the terms "mounted," "connected," "coupled," and/or their equivalents are used broadly and encompass both "direct and indirect" mounting, connecting and coupling. Further, "connected" and "coupled" are not restricted to physical or mechanical connections or couplings, and can include electrical connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention and defined by the claims.

In this specification, embodiments of a leaning vehicle running-state light-emitting device that emits light corresponding to a leaning vehicle running-state class.

In the following description, for purposes of explanation, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

[Leaning Vehicle]

A leaning vehicle herein is a leaning vehicle that turns in a leaning posture. Specifically, the leaning vehicle is a leaning vehicle that leans leftward when turning to the left and leans rightward when turning to the right. The leaning vehicle may be a singlepassenger leaning vehicle or a leaning vehicle on which a plurality of passengers can ride. The leaning vehicle includes all the types of leaning vehicles that turn in leaning postures, such as three-wheeled vehicles and four-wheeled vehicles as well as two-wheeled vehicles.

[Light Source]

A light source herein refers to a light source that emits visible light. For example, the light source includes a lamp and a light-emitting diode. The light source may emit light of a plurality of colors, or emit light of a single color or a plurality of colors that blink(s).

[Leaning Vehicle Posture Data Detector]

A leaning vehicle posture data detector herein detects at least one of a physical quantity related to a yaw angle, a physical quantity related to a roll angle, or a physical quantity related to a pitch angle in a leaning vehicle, during traveling of the leaning vehicle. The leaning vehicle posture data detector includes, for example, a gyro sensor that detects angular velocities in three directions, that is, yaw, roll, and pitch, of the leaning vehicle.

[Physical Quantity Related to Yaw Angle]

A physical quantity related to a yaw angle herein includes a value of a rotation angle of a vehicle body (yaw angle), a value of a time rate of change of the rotation angle (yaw rate), and a time rate of change of the yaw rate (yaw angle acceleration), for example, in yaw that is rotation movement of the vehicle body about a vertical axis passing through a centroid point of the vehicle body.

[Physical Quantity Related to Roll Angle]

A physical quantity related to a roll angle herein includes a value of a rotation angle of the vehicle body (roll angle), a value of time rate of change of the rotation angle (roll rate), and a time rate of change of the roll rate (roll angle acceleration), for example, in roll that is rotation movement of the vehicle body about a front-rear axis passing through the centroid point of the vehicle body.

[Physical Quantity Related to Pitch Angle]

A physical quantity related to a pitch angle herein includes a value of a rotation speed of the vehicle body (pitch angle), a value of time rate of change of the rotation speed (pitch rate), and a time rate of change of the pitch rate (pitch angle acceleration), for example, in pitch that is rotation movement of the vehicle body about a left-right axis passing through the centroid point of the vehicle body.

[Turning State]

A turning state herein refers to a state where a leaning vehicle is performing turning movement that is a target of determination of a driving skill of a driver. The turning movement is determined based on, for example, the yaw rate, the roll rate, or a physical quantity data obtained by a global positioning system (GPS). The turning state is, for example, a case where the yaw rate is kept at a certain level or more for a given period or more.

[Data Concerning Running State]

Data concerning a running state herein includes a posture of a vehicle body and an acceleration and deceleration of the leaning vehicle during traveling of the leaning vehicle, and refers to data for calculating a driving skill of a driver. For example, the data concerning a running state includes data obtained by chronologically acquiring data detected by a leaning vehicle posture data detector during traveling of the leaning vehicle.

[Leaning Vehicle Running-state Class]

Running state classes herein refer to classes classified by steering ability obtained from a determination result of a driver's relative driving skill of the leaning vehicle; the determination result is obtained by determining data concerning a running state based on a driving skill determination criterion. The leaning vehicle running-state classes can be obtained by classifying driving skills of drivers based on, for example, a smooth movement degree of the leaning vehicle, a nimble movement degree of the leaning vehicle, or both of the smooth movement degree of the leaning vehicle and the nimble movement degree of the leaning vehicle. The leaning vehicle running-state classes include, for example, classes for beginner, intermediate, advanced, and most advanced.

[Real Time]

Real time herein refers to during traveling of the leaning vehicle, and includes a state where the leaning vehicle is turning.

[Light-emission Mode]

A light-emission mode herein refers to a state where a light source of a light emitter illuminates and emits light, and includes a state where the light source emits a color of visible light or a state where the light source emits visible light that blinks.

[Smooth Movement]

Smooth movement herein refers to movement of the leaning vehicle in a case where actual turning movement of the leaning vehicle corresponds to turning movement predicted based on an intention of a driver while the leaning vehicle is running around a corner.

[Nimble Movement]

Nimble movement herein refers to movement of the leaning vehicle in a case where actual turning movement of the leaning vehicle corresponds to turning movement predicted based on an intention of a driver in order to obtain a turning force of the leaning vehicle while the leaning vehicle is running around a corner.

ADVANTAGES OF INVENTION

One embodiment of the present teaching can provide a leaning vehicle running-state light-emitting device that classifies a running state, including a turning state, of a leaning vehicle into a plurality of classes by using data detected by a leaning vehicle posture data detector mounted on the leaning vehicle and that emits light corresponding to a leaning vehicle running-state class.

BRIEF DESCRIPTION OF DRAWINGS

[FIG. 1] FIG. 1 is a left side view of a leaning vehicle according to an embodiment.
[FIG. 2] FIG. 2 is a disassembled perspective view of a leaning vehicle running-state light-emitting device according to the embodiment.
[FIG. 3] FIG. 3 is a perspective view of a state where the leaning vehicle running-state light-emitting device according to the embodiment is attached to a tandem seat, when seen from front of the leaning vehicle.
[FIG. 4] FIG. 4 is a perspective view of the state where the leaning vehicle running-state light-emitting device according to the embodiment is attached to the tandem seat, when seen from rear of the leaning vehicle.
[FIG. 5] FIG. 5 is a functional block diagram illustrating a schematic configuration of the leaning vehicle running-state light-emitting device according to the embodiment and an information processor.
[FIG. 6] FIG. 6 is a functional block diagram illustrating a specific configuration of the leaning vehicle running-state light-emitting device according to the embodiment and the information processor.
[FIG. 7] FIG. 7 is a graph for describing an example of a turning movement determination according to the embodiment.
[FIG. 8] FIG. 8 is a graph for describing an example of a component separation of a detection value according to the embodiment.
[FIG. 9] FIG. 9 is a functional block diagram illustrating a configuration of a smooth movement characteristic determiner and its vicinity in the leaning vehicle according to the embodiment.
[FIG. 10] FIG. 10 is a graph showing an example of a low-frequency band g(t) of a yaw rate in a turning movement section Y.
[FIG. 11] FIG. 11 is a graph showing an example of a high-frequency band f(t) of the yaw rate in the turning movement section Y.
[FIG. 12] FIG. 12 is a functional block diagram illustrating a configuration of a nimble movement characteristic determiner and its vicinity in the leaning vehicle according to the embodiment.
[FIG. 13] FIG. 13 is a graph showing a low-frequency band component of a detected angle.
[FIG. 14] FIG. 14 is a flowchart of a driving skill determination according to an embodiment.
[FIG. 15] FIG. 15 is a distribution chart in which a smooth movement degree and a nimble movement degree of a driver according to the embodiment are plotted on a two-dimensional coordinate system.
[FIG. 16] FIG. 16 is a view illustrating an overall configuration of the leaning vehicle and a configuration of the leaning vehicle running-state light-emitting device.

DESCRIPTION OF EMBODIMENT

Each embodiment of the present application will be described hereinafter with reference to the drawings. The dimensions of components in the drawings do not strictly represent actual dimensions of the components and dimensional proportions of the components.
In the following description, arrow F in the drawings represents the forward direction of a leaning vehicle. Arrow RR in the drawings represents the rearward direction of the leaning vehicle. Arrow U in the drawings represents the upward direction of the leaning vehicle. The front, rear, left, and right directions respectively refer to the front, rear, left, and right directions when seen from a driver driving the leaning vehicle.

<Overall Configuration>

FIG. 1 is a left side view of a leaning vehicle 1 according to an embodiment of the present teaching. The leaning vehicle 1 is, for example, a motorcycle. Specifically, the leaning vehicle 1 is a leaning vehicle that leans leftward when turning to the left and turns rightward when turning to the right. The leaning vehicle 1 includes a vehicle body 2, a front wheel 3, a rear wheel 4, and a leaning vehicle running-state light-emitting device 20.
The vehicle body 2 includes a body cover 5, a handlebar 6, a front seat (seat) 7a, a tandem seat (rear seat) 7b, a power unit 8, and a body frame 10. The body frame 10 supports components such as the body cover 5, the handlebar 6, the front seat 7a, the tandem seat 7b, and the power unit 8.

The power unit 8 includes an engine 8a. In this embodiment, the vehicle body 2 includes the body frame 10 and a rear arm 14. The vehicle body 2 is a structure supporting components of the leaning vehicle 1.

The body frame 10 includes a head pipe 11, a main frame (not shown), and a rear frame (not shown). The body frame 10 is covered with the body cover 5.

The rear arm 14 is connected to the main frame to be rotatable in a top-bottom direction, and supports the rear wheel 4 with respect to the body frame 10.

A steering shaft 12 is inserted in the head pipe 11. The handlebar 6 is coupled to the upper end of the steering shaft 12. A brake lever (not shown) is disposed at the right end of the handlebar 6.

A pair of extendable front forks 9 is coupled to the lower end of the steering shaft 12. Accordingly, the front forks 9 swing by rotation operation of the handlebar 6. The front wheel 3 is rotatably attached to the lower ends of the front forks 9. Vibrations of the front wheel 3 are absorbed by extension and contraction of the front forks 9. A brake 13 is attached to the lower ends of the front forks 9. The brake 13 applies a braking force to the front wheel 3 by operation of the brake lever.

The front seat 7a is located at a center portion of the leaning vehicle 1 in the front-rear direction. A driver is seated on the front seat 7a. The tandem seat 7b is located at the rear of the front seat 7a.

In this embodiment, a leaning vehicle running-state light-emitting device 20 that emits light corresponding to a leaning vehicle running-state class (hereinafter referred to as a leaning vehicle running-state light-emitting device) is attached to the tandem seat (rear seat) 7b in the vehicle body 2 by using belts 32 and 32. Accordingly, the leaning vehicle running-state light-emitting device 20 is disposed on the vehicle body 2 of the leaning vehicle 1 and located at the rear of a driver seated on the front seat 7a of the leaning vehicle 1.

<Configuration of Leaning Vehicle Running-state Light-emitting Device 20>

Next, an example of a configuration of the leaning vehicle running-state light-emitting device 20 will be described with reference to FIGS. 2 through 4. FIG. 2 is a disassembled perspective view of the leaning vehicle running-state light-emitting device 20. FIG. 3 is a perspective view of a state where the leaning vehicle running-state light-emitting device 20 is attached to the tandem seat 7b, when seen from the front. FIG. 4 is a perspective view of a state where the leaning vehicle running-state light-emitting device 20 is attached to the tandem seat 7b, when seen from the rear.

The leaning vehicle running-state light-emitting device 20 includes a case 21. The case 21 includes an upper case 21a and a lower case 21b. The upper case 21a and the lower case 21b form, inside the case 21, a housing space capable of housing electric components including a plurality of light sources 22a, 22b, 22c, and 22d and batteries 25 and 26.

The upper case 21a includes an upper panel 211, a right panel 212, a left panel 213, and a rear panel 214. The upper case 21a has a substantially square shape when seen from above. A front portion of the upper case 21a faces the driver seated on the front seat 7a.

The upper panel 211, the right panel 212, the left panel 213, and the rear panel 214 are formed as one unit and made of a transparent or a semitransparent resin. A space surrounded by the upper panel 211, the right panel 212, the left panel 213, and the rear panel 214 is an upper housing space 21e.

The light sources 22a, 22b, 22c, and 22d described above are housed in the upper housing space 21e of the upper case 21a. As described above, the upper case 21a is made of a transparent or semitransparent resin. The light sources 22a, 22b, 22c, and 22d housed in the case 21 emit light in at least the left, right, and rear directions with respect to the leaning vehicle 1. In this embodiment, the light sources 22a, 22b, 22c, and 22d emit forward, leftward, rightward, and rearward, respectively. Thus, when the light sources 22a, 22b, 22c, and 22d are turned on, light from the light sources passes through the upper panel 211, the right panel 212, the left panel 213, and the rear panel 214 of the upper case 21a. Consequently, participants on seats in an event site, for example, can visually recognize the light that has passed through the upper case 21a, from the top, left, right, and rear with respect to the leaning vehicle running-state light-emitting device 20.

The lower case 21b is attached to the upper case 21a. Accordingly, the lower case 21b covers a lower portion of the upper case 21a. The lower case 21b includes a bottom plate 21c and a side plate 21g extending upward from the bottom plate 21c. A space surrounded by the bottom plate 21c and the side plate 21g is a lower housing space 21f housing electric components such as the batteries 25 and 26. A front portion of the lower case 21b is provided with a front wall 21d covering a front portion of the upper case 21a.

The lower case 21b is made of an opaque resin. Accordingly, the lower case 21b is configured such that the electric components such as the batteries 25 and 26 housed in the lower housing space 21f are not seen from the outside.

The front wall 21d of the lower case 21b extends upward from the bottom plate 21c so as to cover a portion of the upper case 21a facing the driver. Thus, the lower case 21b is configured such that light emitted from the light sources 22a, 22b, 22c, and 22d is not directly incident on the driver.

An LED holding plate 22e for attaching the light sources 22a, 22b, 22c, and 22d constituted by LEDs is disposed between the upper case 21a and the lower case 21b with spacers 34 interposed therebetween. Each of the light sources 22a, 22b, 22c, and 22d is an LED light source in which a plurality of LED elements 22g are provided on a prism supporter 22f.

Each of the light sources 22a, 22b, 22c, and 22d includes the plurality of LED elements 22g. Light emitted from the light sources 22a, 22b, 22c, and 22d passes through the upper case 21a to have a luminance with which event participants can sufficiently visually recognize the light from, for example, seats in an event site. The supporters 22f of the four light sources 22a, 22b, 22c, and 22d are attached to disc-shaped bases 22h. Accordingly, the four light sources 22a, 22b, 22c, and 22d are attached to the LED holding plate 22e with the disc-shaped bases 22h interposed therebetween.

In this embodiment, two of the light sources 22a, 22b, 22c, and 22d are attached to each of the front and rear of the LED holding plate 22e at regular intervals. That is, the light sources 22a, 22b, 22c, and 22d are arranged such that light emitted from the light sources 22a, 22b, 22c, and 22d can be easily seen by, for example, participants on seats in an event site.

The light sources 22a, 22b, 22c, and 22d are configured to emit visible light of different colors. For example, the light source 22a may be an LED light source that emits red light. For example, the light source 22b may be an LED light source that emits yellow light. For example, the light source 22c may be an LED light source that emits green light. For example, the light source 22d may be an LED light source that emits blue light.

In this embodiment, the disc-shaped bases 22h and the LED holding plate 22e are composed of metal plates. Accordingly, heat generated when the LED elements 22g are on can be efficiently dissipated.

The lower housing space 21f is disposed between the lower case 21b and the LED holding plate 22e. Electric components such as batteries and an electronic circuit board 200 are disposed inside the lower housing space 21f.

In this embodiment, the batteries 25 and 26 are housed in the lower case 21b. The battery 25 is a 12V battery that supplies electricity to electric components including the light sources 22a, 22b, 22c, and 22d and the electronic circuit board 200. The battery 26 is a 5V battery for charging an information processor 40. The battery 25 is disposed on the battery 26 with a cushioning material 27a interposed therebetween. In this state, the batteries 25 and 26 are held by a battery holder 27.

The battery holder 27 has an arch shape when seen from above. A flange 27c for retaining the battery 25 is provided on an upper portion of each side surface of the battery holder 27. An end of the battery holder 27 has a window 27d through which a cable 25a connected to the battery 25 penetrates. The cable 25a extends to the outside of the battery holder 27 through the window 27d. This cable 25a supplies electricity from the battery 25 to electric components including the light sources 22a, 22b, 22c, and 22d and the electronic circuit board 200.

The battery holder 27 is attached to the lower case 21b.

The cable 26a connected to the battery 26 extends to the outside through a cable outlet 21h of the lower case 21b. The cable 26a is inserted in a charging terminal of the information processor 40. Thus, a sufficient operating time of the information processor 40 can be obtained.

The lower case 21b houses the electronic circuit board 200 provided with an electronic circuit constituting a leaning vehicle running-state class data receiver 23 and an illumination controller 24. The illumination controller 24 includes the electronic circuit of the electronic circuit board 200 and an FET 35 controlled based on a signal output from the electronic circuit. The electronic circuit controls on and off of the FET 35 so that illumination of the light sources 22a, 22b, 22c, and 22d is thereby controlled.

The lower case 21b also houses a cooling fan 28. The cooling fan 28 takes air from an air window 28a provided in the bottom plate 21c. Accordingly, electric components including the electronic circuit board 200 and the light sources 22a, 22b, 22c, and 22d are cooled. Air that has cooled the electric components including the electronic circuit board 200 and the light sources 22a, 22b, 22c, and 22d is discharged to the outside from a discharge port 28b.

The lower case 21b has a hole 21j for attaching a switch 37 and a charging port 21i for charging the batteries 25 and 26. A charging terminal 25b is attached to the charging port 21i. Except for a period in which the batteries 25 and 26 are charged, the charging port 21i is closed with a charging bush 36. The cable 25a connected to the battery 25 and a cable connected to the electronic circuit board 200 (not shown) are held by a cable holder 33. The cable holder 33 is fixed to bosses 33a and 33a provided on the bottom plate 21c of the lower case 21b with screws (not shown).

The front wall 21d of the lower case 21b is provided with a housing part (detector housing part) 30 that holds an information processor (smartphone) 40 including a leaning vehicle posture data detector 41 and a leaning vehicle running-state class data generator 42. The information processor 40 is held by being sandwiched between the holding part 30a provided in the housing part 30 and a lower surface 30b of the housing part 30. The presence of the housing part 30 described above in the lower case 21b enables the information processor 40 to be easily housed and held in the lower case 21b.

A holding member 31 having a rigidity higher than that of a seat is attached to a lower portion of the lower case 21b. In this embodiment, the holding member 31 is a metal plate. The two belts 32 and 32 are sandwiched between the bottom plate 21c of the lower case 21b and the holding member 31. With the two belts 32 and 32 sandwiched between the bottom plate 21c of the lower case 21b and the holding member 31, the holding member 31, the lower case 21b, and the upper case 21a are fixed with screws (not shown). In this manner, the holding member 31, the lower case 21b, and the upper case 21a are united. In this embodiment, the case 21 constituted by the upper case 21a and the lower case 21b is attached to the tandem seat 7b of the vehicle body 2 by using the belts 32 and 32. Accordingly, the case 21 of the leaning vehicle running-state light-emitting device 20 is disposed on the vehicle body 2 of the leaning vehicle 1 and located at the rear of a driver seated on the front seat 7a of the leaning vehicle 1.

The case 21 in this embodiment has a length of about 20 cm in the front-rear direction, a length of about 18 cm in the left-right direction, and a length of about 10 cm in the height direction. In the case 21, components are efficiently arranged.

As illustrated in FIGS. 3 and 4, the leaning vehicle running-state light-emitting device 20 is fixed to the tandem seat 7b by using the belts 32 and 32 while being located on the tandem seat 7b with the holding member 31 interposed therebetween. The presence of the holding member 31 having a rigidity higher than that of the tandem seat 7b between the case 21 and the tandem seat 7b can obtain a strength necessary for attaching the case 21.

In addition, in the leaning vehicle running-state light-emitting device 20, the case 21 is mounted on the tandem seat 7b with the holding member 31 interposed therebetween, and thereby vibrations applied to the information processor 40 held by the case 21 and including the leaning vehicle posture data detector 41 can be reduced. Accordingly, inclusion of noise caused by the vibrations in data detected by the leaning vehicle posture data detector 41 can be suppressed.

The information processor 40 includes the leaning vehicle posture data detector 41 and the leaning vehicle running-state class data generator 42, as described later.

Leaning vehicle posture data detected by the leaning vehicle posture data detector 41 of the information processor 40 is output to the leaning vehicle running-state class data generator 42. Based on the leaning vehicle posture data, the leaning vehicle running-state class data generator 42 classifies data concerning a running state, including a turning state, of the leaning vehicle 1 into a plurality of running state classes to thereby generate leaning vehicle running-state class data.

The leaning vehicle running-state class data is input to the leaning vehicle running-state class data receiver 23 of the leaning vehicle running-state light-emitting device 20. Based on the leaning vehicle running-state class data input to the leaning vehicle running-state class data receiver 23, the illumination controller 24 controls illumination of the light sources 22a, 22b, 22c, and 22d of the light emitter 22.

As described above, the leaning vehicle running-state light-emitting device 20 causes the light emitter 22 to emit light based on the leaning vehicle running-state class data. In the leaning vehicle running-state light-emitting device 20 of this embodiment, participants on seats in an event site, for example, can visually recognize a light-emission state of the light emitter 22 from the top, right, left, and rear of the leaning vehicle running-state light-emitting device 20. Thus, the leaning vehicle running-state light-emitting device 20 enables participants on seats in an event side, for example, to visually recognize a leaning vehicle running-state class obtained from data concerning a running state, including a turning state, of the leaning vehicle 1, based on the light-emission state of the light emitter 22 without complicated display control or the like. That is, the participants, for example, can recognize the state where a driver drives the leaning vehicle 1 and the leaning vehicle running-state class at the same time based on the light-emission state of the light emitter 22. In addition, the light emitter 22 emits light based on the leaning vehicle running-state classes as described above so that the mode of display can be simplified as compared to a case where data concerning the running state of the leaning vehicle 1 is displayed as it is.

<Circuit Configuration of Leaning Vehicle Running-state Light-emitting Device 20>

Next, with reference to FIGS. 5, 6, and 16, a circuit configuration of the leaning vehicle running-state light-emitting device 20 will be described. FIG. 5 is a functional block diagram illustrating a schematic configuration of the leaning vehicle running-state light-emitting device 20 according to the embodiment and the information processor 40. FIG. 6 is a functional block diagram illustrating a specific configuration of the leaning vehicle running-state light-emitting device 20 and the information processor 40. FIG. 16 is a view illustrating an overall configuration of the leaning vehicle 1 and a configuration of the leaning vehicle running-state light-emitting device 20.

The leaning vehicle running-state light-emitting device 20 includes the case 21, the light emitter 22 including the light sources 22a, 22b, 22c, and 22d that emit light toward the left, right, and rear of the leaning vehicle 1, the leaning vehicle running-state class data receiver 23 to which leaning vehicle running-state class data is input, and the illumination controller 24 that controls illumination of the light sources 22a, 22b, 22c, and 22d.

As described above, the light emitter 22, the leaning vehicle running-state class data receiver 23, and the illumination controller 24 are housed in the case 21.

The light emitter 22 includes the four light sources 22a, 22b, 22c, and 22d housed in the case 21 in this embodiment. These light sources 22a, 22b, 22c, and 22d are constituted by LED light sources as described above. The light sources 22a, 22b, 22c, and 22d are configured to emit visible light of different colors. In this embodiment, as described above, for example, the light source 22a emits red light. For example, the light source 22b emits yellow light. For example, the light source 22c emits green light. For example, the light source 22d emits blue light.

The leaning vehicle running-state class data is input to the leaning vehicle running-state class data receiver 23 from the leaning vehicle running-state class data generator 42 of the information processor 40 described later by, for example, wire or wirelessly. In the case of wireless communication, the leaning vehicle running-state class data receiver 23 includes a transmission/reception circuit capable of transmitting and receiving data based on a wireless LAN standard such as Bluetooth (registered trademark) or Wi-Fi (registered trademark). Data is transmitted and received between the leaning vehicle running-state class data generator 42 and the leaning vehicle running-state class data receiver 23.

In the case of wired communication, the leaning vehicle running-state class data receiver 23 includes a port to which the cable is connected, and a transmission/reception circuit capable of transmitting and receiving data based on a wired standard. Data is transmitted and received between the leaning vehicle running-state class data generator 42 and the leaning vehicle running-state class data receiver 23.

In this embodiment, the leaning vehicle running-state class data input to the leaning vehicle running-state class data receiver 23 is data obtained by classifying driving skills of drivers based on, for example, the degree of smooth movement of the leaning vehicle 1, the degree of nimble movement of the leaning vehicle 1, or both of the degree of smooth movement of the leaning vehicle 1 and the degree of nimble movement of the leaning vehicle 1.

The illumination controller 24 controls illumination of the light sources 22a, 22b, 22c, and 22d of the light emitter 22 based on the leaning vehicle running-state class data input to the leaning vehicle running-state class data receiver 23. Specifically, based on the leaning vehicle running-state class data, the illumination controller 24 selects one of the light sources 22a, 22b, 22c, and 22d associated with a leaning vehicle running-state class of a driver and causes the selected one of the light sources 22a, 22b, 22c, and 22d to emit light.

In this embodiment, the leaning vehicle running-state class data obtained by classifying data concerning a running state, including a turning state, of the leaning vehicle 1 into a plurality of running state classes is calculated by the information processor 40 described later.

Next, a specific example of the leaning vehicle running-state light-emitting device 20 that emits light corresponding to a leaning vehicle running-state class will be further described with reference to FIG. 6.

The information processor 40 is constituted by, for example, a smartphone. The information processor 40 incorporates one or more given application(s) to thereby constitute the leaning vehicle posture data detector 41 and the leaning vehicle running-state class data generator 42.

The leaning vehicle posture data detector 41 detects at least one of a physical quantity related to a yaw angle, a physical quantity related to a roll angle, or a physical quantity related to a pitch angle in the leaning vehicle 1, during traveling of the leaning vehicle 1, by using a gyro sensor 41a incorporated in, for example, the smartphone. In this embodiment, the leaning vehicle posture data detector 41 includes an acceleration sensor 41b. The information processor 40 can calculate a vehicle speed of the leaning vehicle 1 and an acceleration and a deceleration of the leaning vehicle 1 by using an output of the acceleration sensor 41b.

The leaning vehicle running-state class data generator 42 classifies data concerning a running state, including a turning state, of the leaning vehicle 1 into a plurality of running state classes based on leaning vehicle posture data detected by the leaning vehicle posture data detector 41 to thereby generate leaning vehicle running-state class data. In this embodiment, the leaning vehicle running-state class data generator 42 determines a driving skill based on the leaning vehicle posture data detected by the leaning vehicle posture data detector 41. Then, the leaning vehicle running-state class data generator 42 classifies the determined driving skill into a plurality of leaning vehicle running-state classes based on a driving determination criterion to thereby generate leaning vehicle running-state class data. The generated leaning vehicle running-state class data is input to the leaning vehicle running-state class data receiver 23 of the leaning vehicle running-state light-emitting device 20.

As described above, the leaning vehicle running-state class data generated by classification into the plurality of leaning vehicle running-state classes is class data classified by steering ability. The leaning vehicle running-state class data is obtained from a determination result of a driver’s relative driving skill; the determination result is obtained by determining data concerning a running state, including a turning state, of the leaning vehicle 1 based on a driving skill determination criterion. The leaning vehicle running-state class data generator 42 will be specifically described later.

As described above, the information processor 40 includes the leaning vehicle posture data detector 41 and the leaning vehicle running-state class data generator 42. In this embodiment, the leaning vehicle posture data detector 41 includes the gyro sensor 41a and the acceleration sensor 41b.

In this embodiment, the gyro sensor 41a and the acceleration sensor 41b are incorporated in the information processor (smartphone) 40 housed in the leaning vehicle running-state light-emitting device 20.

The gyro sensor 41a detects leaning vehicle posture data on, for example, angular velocities and angles in the directions of three axes such as yaw, roll, and pitch of the leaning vehicle 1. That is, the gyro sensor 41a detects a yaw rate, a yaw angle, a roll rate, a roll angle, a pitch rate, and a pitch angle of the leaning vehicle 1. These detection values of angular velocities and angles in three axes are output from the gyro sensor 41a to the leaning vehicle running-state class data generator 42.

The acceleration sensor 41b detects an acceleration of the leaning vehicle 1. The detected acceleration is sent to the leaning vehicle running-state class data generator 42. The leaning vehicle running-state class data generator 42 calculates a vehicle speed from the detected acceleration.

When a driver steers the handlebar 6 of the leaning vehicle 1 while turning around a curve, the yaw angle, the yaw rate, and the steering angle of the leaning vehicle 1 change. When the driver leans the vehicle body 2 of the leaning vehicle 1 toward the center of the curve, the roll angle and the roll rate of the leaning vehicle 1 change. When the speed of the leaning vehicle 1 decreases by a driver's operation of the brake lever before the leaning vehicle 1 reaches the curve or while the leaning vehicle 1 is running around the curve, the front forks 9 contract. The pitch angle and the pitch rate of the leaning vehicle 1 change in accordance with the contraction of the front forks 9.

In this embodiment, the yaw angle, the yaw rate, the roll angle, the roll rate, the pitch angle, the pitch rate, and the vehicle speed of the leaning vehicle 1 are referred to as leaning vehicle state quantities.

The leaning vehicle running-state light-emitting device 20 is attached to the tandem seat 7b. The leaning vehicle running-state light-emitting device 20 controls, in real time, illumination of light emission of the light sources 22a, 22b, 22c, and 22d of the light emitter 22 based on leaning vehicle running-state class data obtained by the leaning vehicle running-state class data generator 42. A participant on a seat in an event site, for example, can visually recognize the driving skill or the like in real time based on a running state, including a turning state, of the leaning vehicle 1 based on a light-emission state of the light emitter 22. At this time, the participant on the seat in the event site, for example, can also visually recognize the running state of the leaning vehicle 1 actually running. As described above, the participant on the seat in the event site, for example, can also visually recognize the light-emission state together with the running state of the leaning vehicle 1. In this manner, the participant on the seat in the event site, for example, can also know a relationship between, for example, the running state of the leaning vehicle 1 and the driving skill.

<Configuration of Leaning Vehicle Running-state Class Data Generator 42>

Next, a configuration of the leaning vehicle running-state class data generator 42 will be specifically described.

As illustrated in FIG. 6, outputs of the gyro sensor 41a and the acceleration sensor 41b are input to the leaning vehicle running-state class data generator 42. The outputs of the gyro sensor 41a and the acceleration sensor 41b are the leaning vehicle state quantities.

The leaning vehicle running-state class data generator 42 determines a driving skill based on the leaning vehicle state quantities output from the gyro sensor 41a and the acceleration sensor 41b. Then, the leaning vehicle running-state class data generator 42 classifies the determined driving skill into a plurality of leaning vehicle running-state classes based on a steering determination criterion to thereby generate leaning vehicle running-state class data.

The output of the leaning vehicle running-state class data generator 42 is input to the leaning vehicle running-state class data receiver 23 of the leaning vehicle running-state light-emitting device 20.

The leaning vehicle running-state class data generator 42 includes a memory 51, a turning movement determiner 52, a component separator 53, a smooth movement characteristic determiner 54, a nimble movement characteristic determiner 55, an overall characteristic determiner 56, a database 57, and a transmitter 60.

The leaning vehicle state quantities input to the leaning vehicle running-state class data generator 42 are individually stored in the memory 51 chronologically.

<Turning Movement Determination>

The turning movement determiner 52 determines whether or not the leaning vehicle 1 has performed turning movement that is a target of determination of a driving skill of a driver. The turning movement here is a movement in which a yaw rate of the leaning vehicle 1 is greater than or equal to a given level and continues for a given time or longer. If the conditions described above are not satisfied, the turning movement determiner 52 does not determine that the leaning vehicle 1 has performed turning movement.

FIG. 7 is a graph for describing turning movement determination performed by the turning movement determiner 52. In FIG. 7, values on the abscissa and ordinate are examples, and the present teaching is not limited to these values. The turning movement determiner 52 determines a turning movement section Y by using an absolute value of a detection value of a yaw rate input from the gyro sensor 41a. Specifically, if a target section is a section from a point when the absolute value of the detection value of the yaw rate of the leaning vehicle 1 exceeds a threshold X to a point when the absolute value goes below the threshold X again and duration of this section is greater than or equal to a minimum duration time $Y_{min}$, the turning movement determiner 52 determines this section as the turning movement section Y.

If duration of the section from the point when the detection value of the yaw rate of the leaning vehicle 1 exceeds the threshold X to the point when the detection value goes below the threshold X again is less than the minimum duration time Ymin, the turning movement determiner 52 determines that this section is not the turning movement section. The value of the threshold X only needs to be appropriately set depending on the vehicle type of the leaning vehicle 1. In the example described above, the turning movement determiner 52 determines the turning movement section Y by using the yaw rate, but may determine the turning movement section Y by using the yaw angle. In the case of determining the turning movement section Y by using the yaw angle, the turning movement determiner 52 can determine the turning movement section Y in the manner described above after converting angle data into yaw rate data by, for example, time derivative.

FIG. 9 is a functional block diagram illustrating a configuration of the smooth movement characteristic determiner 54 and its vicinity. If the turning movement determiner 52 determines that a specific section is the turning movement section Y, the detection value of each leaning vehicle state quantity stored in the memory 51 in the turning movement section Y is output to the component separator 53. The component separator 53 is constituted by a low-pass filter 65 and a band-pass filter 66. Each detection value input to the component separator 53 is subjected to filtering by the low-pass filter 65 and the band-pass filter 66.

With reference to FIG. 8, component separation of each detection value will be described. FIG. 8 is a graph for describing component separation of a detection value. In FIG. 8, values on the abscissa and ordinate are examples, and the present teaching are not limited to these values. In the component separator 53, leaning vehicle state quantities capable of being processed in component separation are a yaw rate, a yaw angle, a roll rate, a roll angle, a pitch rate, and a pitch angle. Here, component separation of the roll rate by filtering will be described as an example.

All frequency band data 71 of the roll rate input to the component separator 53 is subjected to filtering by the low-pass filter 65 and the band-pass filter 66. The low-pass filter 65 removes a high frequency component higher than a predetermined threshold frequency Fc1. Accordingly, a low-frequency band component 72 of the roll rate is output from the low-pass filter 65.

The band-pass filter 66 removes a low frequency component less than or equal to the threshold frequency Fc1 and removes a noise component greater than or equal to a threshold frequency Fc2. Accordingly, a high-frequency band component 73 of the roll rate is output from the band-pass filter 66. A frequency component greater than or equal to the threshold frequency Fc2 is a noise component, and thus, is irrelevant to determination of a characteristic of a driver.

Chronological data of each detection value stored in the memory 51 is subjected to filtering by the low-pass filter 65 and the band-pass filter 66 so that each detection value is thereby separated into a low-frequency band component and a high-frequency band component. The threshold frequency Fc1 for the separation into the low-frequency band component and the high-frequency band component is a value preferably between 0.2[Hz] to 5[Hz]. The threshold frequency Fc1 may be set depending on a characteristic to be determined. For example, in the case of determining a characteristic of a driver, the threshold frequency Fc1 may be set such that a difference between a beginner and an advanced is at the maximum. The threshold frequency Fc2 is a value preferably greater than or equal to 2[Hz] to 10[Hz]. It should be noted that the threshold frequency Fc2 needs to be larger than the threshold frequency Fc1.

<Smooth Movement Characteristic Determination>

The smooth movement characteristic determiner 54 determines a smooth movement characteristic of the leaning vehicle 1. The smooth movement characteristic determiner 54 includes a smooth movement score calculator 75. Smooth movement herein refers to movement of the leaning vehicle 1 in a case where actual turning movement of the leaning vehicle 1 corresponds to turning movement predicted based on an intention of a driver during traveling of the leaning vehicle 1 around a corner.

Each detection value in the turning movement section Y of the leaning vehicle 1 subjected to filtering by the low-pass filter 65 and the band-pass filter 66 is input to the smooth movement score calculator 75. Here, as an example, a case where a yaw rate, a roll rate, and a pitch rate are input to the smooth movement score calculator 75 will be described.

FIG. 10 is a graph showing an example of a low-frequency band g(t) of a yaw rate in a turning movement section Y. As shown in FIG. 10, the low-frequency band g(t) of each rate separated by using the threshold frequency Fc1 as a boundary is used as a prediction component in a case where a driver turns around a curve. FIG. 11 is a graph showing an example of a high-frequency band f(t) of the yaw rate in the turning movement section Y. As shown in FIG. 11, the high-frequency band f(t) is used as a correction component for correction when the driver turns around the curve.

The smooth movement score calculator 75 calculates, for each of a yaw rate, a roll rate, and a pitch rate, a mean value of an integral value per a unit time of the prediction component and the correction component of each rate in the turning movement section Y from Equation (1) below. The smooth movement score calculator 75 uses values obtained by dividing a value corresponding to each obtained prediction component by a value corresponding to the correction component, as a smooth movement index ($S_{yaw}$, $S_{roll}$, or $S_{pitch}$) of each of the yaw rate, the roll rate, and the pitch rate in one turning movement section Y.

[Equation 1]

$$S = \frac{\frac{1}{Y}\int |g(t)|dt}{\frac{1}{Y}\int |f(t)|dt} \quad \cdots(1)$$

While the leaning vehicle 1 is running around a curve, when a driver performs a smooth operation, an integral quantity of the absolute value of the low-frequency band g(t) is large and an integral quantity of the absolute value of the high-frequency band f(t) is small. While the leaning vehicle 1 is turning around a curve, when the driver performs fine and abrupt correction operation, the integral quantity of the absolute value of the high-frequency band f(t) becomes large, and the integral quantity of the absolute value of the low-frequency band g(t) becomes small accordingly. As described above, by using proportions of the integral quantity of the absolute value of the low-frequency band g(t) and the integral quantity of the absolute value of the high-frequency band f(t) as indexes, a characteristic of the driver running around a curve can be converted to scores.

By obtaining proportions of the integral quantities of the absolute values of the low-frequency band g(t) and the high-frequency band f(t) in the yaw rate, the roll rate, and the pitch rate during turning movement of the leaning vehicle 1, indexes of smooth movement of the leaning vehicle 1 can be calculated. In addition, the smooth movement score calculator 75 calculates a smooth movement score $S_V$ that is a weighting linear sum of the three smooth movement indexes ($S_{yaw}$, $S_{roll}$, and $S_{pitch}$) as in Equation (2). In Equation (2), $k_1$, $k_2$, and $k_3$ are weighting factors. The smooth movement score $S_V$ may be calculated by product, sum of products, or conditional probability, for example, as well as weighting linear sum.

[Equation 2]

$$S_V = K_1 \cdot S_{yaw} + K_2 \cdot S_{roll} + K_3 \cdot S_{pitch} \quad \cdots(2)$$

The smooth movement score calculator 75 outputs the calculated smooth movement score $S_V$ to the overall characteristic determiner 56 and the database 57.

<Nimble Movement Characteristic Determination>

FIG. 12 is a functional block diagram illustrating a configuration of the nimble movement characteristic determiner and its vicinity. The nimble movement characteristic determiner 55 includes a nimble movement score calculator 81. Nimble movement herein refers to movement of the leaning vehicle 1 in a case where actual turning movement of the leaning vehicle 1 corresponds to turning movement predicted based on an intention of a driver in order to obtain a turning force of the leaning vehicle 1 while the leaning vehicle 1 is running around a corner.

Each detection value in the turning movement section Y of the leaning vehicle 1 subjected to filtering by the low-pass filter 65 is input to the nimble movement score calculator 81. Here, as an example, a case where a roll angle and a pitch angle are input to the nimble movement score calculator 81 will be described. A vehicle speed in the turning movement section Y of the leaning vehicle 1 is input to the nimble movement score calculator 81 from the memory 51.

FIG. 13 is a graph showing a low-frequency band component of a detected angle. The low-frequency band g(t) of each angle is interpreted as a prediction component in a case where a driver turns around a curve. While the leaning vehicle 1 is running around a curve, when a driver performs smooth steering operation, the absolute value of the low-frequency band g(t) is large. The threshold frequency fc1 for use in frequency separation of each rate may be different among angles.

[Equation 3]

$$T = \frac{1}{Y}\int |f(t)|dt \quad \cdots(3)$$

The nimble movement score calculator 81 calculates a mean value of an integral value per a unit time of the prediction component in the turning movement section Y, with respect to each of a roll angle and a pitch angle, from Equation (3). The calculated values are a nimble movement index $T_{roll}$ of the roll angle and a nimble movement index $T_{pitch}$ of the pitch angle.

The nimble movement score calculator 81 calculates an average vehicle speed $T_{speed}$ in the turning movement section Y from the input vehicle speed in the turning movement section Y. The nimble movement score calculator 81 calculates a nimble movement score $T_v$ by using the two nimble movement indexes $T_{roll}$ and $T_{pitch}$ and weighting linear sum of the average vehicle speed $T_{speed}$, as expressed in Equation (4). In Equation (4), $k_4$, $k_5$, and $k_6$ are weighting factors. The nimble movement score $T_v$ may be calculated by product, sum of products, or conditional probability, for example, as well as weighting linear sum.
[Equation 4]

$$T_V = K_4 \cdot T_{roll} + K_5 \cdot T_{pitch} + K_6 \cdot T_{speed} \cdots (4)$$

The nimble movement score $T_v$ is output to the overall characteristic determiner 56 and the database 57.
In this embodiment, the overall characteristic determiner 56 described later classifies the driving skill of a driver from the two score results of the smooth movement score $S_v$ and the nimble movement score $T_v$ described above. Depending on this classification, the leaning vehicle running-state light-emitting device 20 controls illumination of the light emitter 22. Accordingly, a participant on a seat in an event site, for example, can intuitively recognize the driving skill.

<Driving Skill Determination>

The overall characteristic determiner 56 obtains a smooth movement degree and a nimble movement degree based on the smooth movement score $S_v$ of the smooth movement score calculator 75 and the nimble movement score $T_v$ of the nimble movement score calculator 81. The overall characteristic determiner 56 classifies a driving skill of a driver in the turning movement section Y.
FIG. 15 is a distribution chart in which a smooth movement degree and a nimble movement degree obtained by using a smooth movement score $S_v$ and a nimble movement score $T_v$ of a driver are plotted on a two-dimensional coordinate system. The smooth movement degree and the nimble movement degree of the driver are classified into some classes based on a driving determination criterion on a two-dimensional coordinate system so that a relative position of the driving skill of the driver is clarified. This makes it possible to clarify points to be improved in the driving skill of the driver and points for guidance. In the example of FIG. 15, the two-dimensional coordinate area is divided into four categories: "active control," "passive control," "rough steering," and "beginner steering." The overall characteristic determiner 56 plots the scores of drivers R1 through R8 on the two-dimensional coordinate area divided into the four categories, thereby classifying driving skills of the drivers.
Here, in FIG. 15, the drivers R1 and R6 included in the "rough steering" class have relatively low smooth movement scores and high nimble movement scores. For example, this class can be defined as an intermediate class. In this embodiment, in a case where the driving skill of a driver belongs to the "rough steering" class, the leaning vehicle running-state light-emitting device 20 causes the light emitter 22 to emit red light. It is determined that the drivers belonging to this class perform active steering in order to obtain nimble movement of the leaning vehicle 1, but does not control smooth movement of the leaning vehicle 1. Thus, it is sufficient for the drivers belonging to this class to acquire a leaning vehicle control method for enhancing smooth movement.
In a case where the leaning vehicle running-state class data generator 42 classifies the driving skill of a driver as the "rough steering" class based on the smooth movement score $S_v$ and the nimble movement score $T_v$, the leaning vehicle running-state class data generator 42 outputs leaning vehicle running-state class data associated with this class to the transmitter 60. In this embodiment, the "rough steering" class is a class in which the light emitter 22 is caused to emit red light. The transmitter 60 transmits class data indicating a red class, to the leaning vehicle running-state class data receiver 23 of the leaning vehicle running-state light-emitting device 20. The class data indicating the red class is input to the leaning vehicle running-state class data receiver 23. The leaning vehicle running-state class data receiver 23 transmits the class data to the illumination controller 24. The illumination controller 24 turns on the light source 22a to thereby cause the light source 22a to emit red light. Accordingly, a participant on a seat in an event site, for example, can visually recognize, in real time, the driving skill and others based on the running state, including a turning state, of the leaning vehicle 1, by using the red-light emission state of the light emitter 22.
In FIG. 15, the driver R2 belonging to the "beginner steering" class has a relatively high smooth movement score and a low nimble movement score. For example, this class can be defined as a beginner class. In this embodiment, in a case where the driving skill of a driver belongs to the "beginner steering" class, the leaning vehicle running-state light-emitting device 20 causes the light emitter 22 to emit yellow light. It is determined that the drivers belonging to this class perform smooth movement in a leaning vehicle behavior, but impair nimble movement by, for example, reducing the roll angle of the leaning vehicle 1 or reducing the turning speed. Thus, it is sufficient for such drivers to acquire a leaning vehicle control method for obtaining nimble movement.
In a case where the leaning vehicle running-state class data generator 42 classifies the driving skill of a driver as the "beginner steering" class based on the smooth movement score $S_V$ and the nimble movement score Tv, the leaning vehicle running-state class data generator 42 outputs leaning vehicle running-state class data associated with this class to the transmitter 60. In this embodiment, the "beginner steering" class is a class in which the light emitter 22 is caused to emit yellow light. The transmitter 60 transmits class data indicating a yellow class, to the leaning vehicle running-state class data receiver 23 of the leaning vehicle running-state light-emitting device 20. The class data indicating the yellow class is input to the leaning vehicle running-state class data receiver 23. The leaning vehicle running-state class data receiver 23 outputs the class data to the illumination controller 24. The illumination controller 24 turns on the light source 22b to thereby cause the light source 22b to emit yellow light. Accordingly, a participant on a seat in an event site, for example, can visually recognize, in real time, the driving skill and others based on the running state, including a turning state, of the leaning vehicle 1, by using the yellow-light emission state of the light emitter 22.

In FIG. 15, the drivers R3 and R8 belonging to the "passive control" class show an advanced steering level. For example, this class can be defined as an advanced class. In this embodiment, in the case of this class, the leaning vehicle running-state light-emitting device 20 causes the light emitter 22 to emit green light. The drivers belonging to this class have room for further improving the driving skill by improving nimble movement.

In a case where the leaning vehicle running-state class data generator 42 classifies the driving skill of a driver as the "passive control" class based on the smooth movement score $S_V$ and the nimble movement score $T_V$, the leaning vehicle running-state class data generator 42 outputs leaning vehicle running-state class data associated with this class to the transmitter 60. In this embodiment, the "passive control" class is a class in which the light emitter 22 is caused to emit green light. The transmitter 60 transmits class data indicating a green class, to the leaning vehicle running-state class data receiver 23 of the leaning vehicle running-state light-emitting device 20. The class data indicating the green class is input to the leaning vehicle running-state class data receiver 23. The leaning vehicle running-state class data receiver 23 outputs the class data indicating the green class to the illumination controller 24. The illumination controller 24 turns on the light source 22c to thereby cause the light source 22c to emit green light. Accordingly, a participant on a seat in an event site, for example, can visually recognize, in real time, the driving skill and others based on the running state, including a turning state, of the leaning vehicle 1, by using the green-light emission state of the light emitter 22.

The drivers R4 and R7 belonging to the "active control" class show a most advanced steering level. For example, this class can be defined as a most advanced class. In this embodiment, in this class, the leaning vehicle running-state light-emitting device 20 causes the light emitter 22 to emit blue light. It is sufficient for the drivers belonging to this class to keep this steering level.

In a case where the leaning vehicle running-state class data generator 42 classifies the driving skill of a driver as the "active control" class based on the smooth movement score $S_V$ and the nimble movement score $T_V$, the leaning vehicle running-state class data generator 42 outputs leaning vehicle running-state class data associated with this class to the transmitter 60. In this embodiment, the "active control" class is a class in which the light emitter 22 is caused to emit blue light. The transmitter 60 transmits class data indicating a blue class, to the leaning vehicle running-state class data receiver 23 of the leaning vehicle running-state light-emitting device 20. The class data indicating the blue class is input to the leaning vehicle running-state class data receiver 23. The leaning vehicle running-state class data receiver 23 outputs the class data to the illumination controller 24. The illumination controller 24 turns on the light source 22d to thereby cause the light source 22d to emit blue light. Accordingly, a participant on a seat in an event site, for example, can visually recognize, in real time, the driving skill and others based on the running state, including a turning state, of the leaning vehicle 1, by using the blue-light emission state of the light emitter 22.

In the manner described above, the leaning vehicle running-state class data generator 42 classifies driving skills of drivers based on the smooth movement degree and the nimble movement degree. Based on the classified data, the leaning vehicle running-state light-emitting device 20 switches the type of visible light emitted from the light emitter 22. Specifically, the leaning vehicle running-state light-emitting device 20 presents light emitted from the light emitter 22 depending on the classification, to a driver or a participant in an event, for example. Accordingly, the driver or the participant of the event, for example, can intuitively recognize the level of the driving skills and a characteristic of the driver while observing an actual running state of the leaning vehicle 1. Consequently, points for improved steering control of drivers and points for guidance can be clarified to, for example, the driver or a participant in an event.

The database 57 sequentially stores a determined class determined by the overall characteristic determiner 56, the smooth movement score $S_V$, and the nimble movement score $T_V$ for each curve at which it is determined that turning movement has been performed. That is, the database 57 stores past and current characteristic results of the drivers.

In this manner, a driver can confirm the past and current characteristic results of the driver stored in the database 57 by operating the information processor 40 after steering of the leaning vehicle 1 is finished.

<Driving Skill Determination Control Operation>

Next, with reference to FIG. 14, control operation of the leaning vehicle running-state class data generator 42 will be described. FIG. 14 is a flowchart of driving skill determination.

When a driver turns on the key, the turning movement determiner 52 thereby acquires a yaw rate of the leaning vehicle 1 detected by the gyro sensor 41a (step S1). Next, the turning movement determiner 52 determines whether the leaning vehicle 1 has performed turning movement or not (step S2). If the turning movement determiner 52 does not determine that the leaning vehicle 1 has performed turning movement (step S2: No), the turning movement determiner 52 continues to take a detection value of the yaw rate. If the turning movement determiner 52 determines that the leaning vehicle 1 has performed turning movement (step S2: Yes), a leaning vehicle state quantity is taken from the memory 51 into the component separator 53 (step S3).

Thereafter, through filtering, the leaning vehicle state quantity is separated depending on frequency components (step S4). Specifically, the leaning vehicle state quantity input to the component separator 53 is separated into a low-frequency band component and a high-frequency band component by the low-pass filter 65 and the band-pass filter 66.

The smooth movement score calculator 75 calculates a smooth movement score $S_v$ by using the leaning vehicle state quantity subjected to filtering (step S5). The nimble movement score calculator 81 calculates a nimble movement score $T_v$ by using the leaning vehicle state quantity subjected to filtering (step S6).

The overall characteristic determiner 56 conducts characteristic determination of the driving skill of a driver by using the smooth movement score $S_v$ and the nimble movement score $T_v$.

Specifically, the overall characteristic determiner 56 classifies drivers in the turning movement section Y by using the smooth movement score $S_v$ and the nimble movement score $T_v$ (step S7).

As illustrated in FIG. 15, the overall characteristic determiner 56 classifies the driving skills of drivers into a plurality of classes based on smooth movement scores $S_v$ and nimble movement scores $T_v$ of drivers.

Depending on the classification of driving skills of drivers, the leaning vehicle running-state light-emitting device 20 causes the light emitter 22 to emit light of a predetermined color (step S8).

Subsequently, the leaning vehicle running-state light-emitting device 20 determines whether the vehicle is in a key-off state or not, and if the vehicle is not in the key-off state (step S9: No), the process returns to step S1, and the operation described above is repeated. If the leaning vehicle running-state light-emitting device 20 determines that the vehicle is in the key-off state (step S9: Yes), operation is finished.

As described above, in the embodiment of the present teaching, while a driver is driving the leaning vehicle 1, the leaning vehicle running-state light-emitting device 20 is turned on in real time depending on the driving skill of the driver for each curve in which the turning movement determiner 52 determines that turning movement has been performed. Consequently, the driver or event participants can know a determination result of the driving skill of the driver together with operation while the driver actually drives the leaning vehicle 1. In this manner, a relationship between a turning state of the leaning vehicle 1 and a determination result of the driving skill of the driver can be easily obtained.

In addition, in a class for teaching driving skills, an event, or other situations, a driver or an event participant can easily recognize the driving skill of the driver based on the color of emitted light that emits corresponding to a class. Accordingly, the driver or the event participant can clearly recognize insufficient points in the driving skill of the driver. In addition, for inexperienced drivers, motivation for improving the driving skill of the leaning vehicle 1 can be enhanced.

A general instruction vehicle can indicate limited operating states such as the number of gear stages, the speed, and the engine stall with lamps, but cannot indicate a running state, including a turning state, of a leaning vehicle. On the other hand, in the embodiment described above, drivers or event participants can visually recognize, in real time, leaning vehicle running-state classes they want to know based on the running state, including a turning state, of the leaning vehicle 1.

(Other Embodiments)

The embodiment of the present teaching has been described above, but the embodiment is merely an example for carrying out the present teaching. Thus, the present teaching is not limited to the embodiment described above, and the embodiment may be modified as necessary within a range not departing from the gist of the present teaching.

In the embodiment described above, the leaning vehicle running-state light-emitting device 20 is attached to the tandem seat 7b. Alternatively, the leaning vehicle running-state light-emitting device 20 may be attached to a carriage (not shown). In the embodiment described above, the leaning vehicle running-state light-emitting device 20 is fixed to the tandem seat 7b by using the belts 32. Alternatively, the leaning vehicle running-state light-emitting device 20 may be directly fixed to the carriage or the like.

In the embodiment described above, the leaning vehicle running-state light-emitting device 20 changes the color of visible light emitted from the light emitter 22, based on the classes. The leaning vehicle running-state light-emitting device 20 may change a light-emission mode depending on the classes, for example, may blink light emitted from the light emitter 22 without changing the color of visible light, together with change of the blinking speed depending on the classes.

In the embodiment described above, the information processor 40 incorporates the gyro sensor 41a and the acceleration sensor 41b. Alternatively, the gyro sensor and the acceleration sensor may be provided in the leaning vehicle 1. In this case, the gyro sensor and the acceleration sensor provided in the leaning vehicle 1 transmit data to the leaning vehicle running-state class data generator 42.

In the embodiment described above, the leaning vehicle running-state class data generator 42 is provided in the information processor 40. Alternatively, the leaning vehicle running-state class data generator 42 may be provided in the leaning vehicle running-state light-emitting device 20. In this case, the information processor 40 sends outputs of the gyro sensor and the acceleration sensor to the leaning vehicle running-state light-emitting device 20. In the case where the gyro sensor and the acceleration sensor are provided in the leaning vehicle, the configuration of the present teaching may be implemented by the leaning vehicle 1 and the leaning vehicle running-state light-emitting device 20 without using the information processor 40.

In the embodiment described above, the leaning vehicle running-state class data generator 42 calculates the smooth movement score $S_v$ from a linear sum by weighting indexes of smooth movement characteristics of the yaw rate, the roll rate, and the pitch rate. Alternatively, the leaning vehicle running-state class data generator 42 may calculate a smooth movement score by using only the index of smooth movement characteristic of the yaw rate. It should be noted that the smooth movement score that more closely reflects running characteristics of the leaning vehicle 1 can be obtained when the smooth movement score $S_v$ is calculated based on smooth movement characteristic indexes not only of the yaw rate but also of the roll rate or the pitch rate, or both of the roll rate of the pitch rate.

In the embodiment described above, the leaning vehicle running-state class data generator 42 performs the classification by using the smooth movement score $S_v$ and the nimble movement score $T_v$. Alternatively, the leaning vehicle running-state class data generator 42 may perform the classification by a method except for the method described in the above embodiment.

For example, the leaning vehicle running-state class data generator 42 compares the smooth movement score $S_v$ with a reference value of a predetermined smooth movement characteristic. Accordingly, smooth movement characteristics of drivers can be determined depending on the classes. The leaning vehicle running-state class data generator 42 also compares the nimble movement score $T_v$ with a reference value of a predetermined nimble movement characteristic. Accordingly, nimble movement characteristics of drivers can be determined depending on the classes. In the manner described above, the leaning vehicle running-state class data generator 42 may classify driving skills of drivers by using one or both of the smooth movement score $S_v$ and the nimble movement score $T_v$.

In the embodiment described above, the turning movement determiner 52 determines the turning movement section Y by using the yaw rate or the yaw angle. Alternatively, the turning movement determiner 52 may determine the turning movement section by using the roll angle, the steering angle, and a GPS trajectory. For example, in the case of determining a turning movement section by using the roll angle, the turning movement determiner 52 determines the turning movement section Y from the amount of change of the roll angle. Specifically, if a target section is a section from a point when the absolute value of the roll angle of the leaning vehicle 1 exceeds a threshold X' to a point when the absolute value goes below the threshold X' again and duration of this section is greater than or equal to a minimum duration time $Y'_{min}$, the turning movement determiner 52 determines this section as the turning movement section Y. If a section from the point when the absolute value of the roll angle of the leaning vehicle 1 exceeds the threshold X' to the point when the absolute value goes below the threshold X' again is less than the minimum duration time $Y'_{min}$, the turning movement determiner 52 does not determine this section as the turning movement section. The value of threshold X' only needs to be appropriately set depending on the vehicle type of the leaning vehicle 1.

For example, in the case of determining a turning movement section by using a steering angle, for example, the leaning vehicle posture data detector 41 includes a detector for detecting a steering angle. Accordingly, in a manner similar to the case of the roll angle, the leaning vehicle posture data detector 41 can determine the turning movement section by using the steering angle.

In a case where the information processor 40 is a smartphone, the turning movement section Y is determined by using an incorporated GPS. In the case of using a travel trajectory of the leaning vehicle 1 obtained by the GPS, the information processor 40 calculates a traveling direction of the leaning vehicle 1 by using GPS data at a given point of time and GPS data obtained at a time before the given point of time. The information processor 40 can determine the turning movement section by using the amount of change of the traveling direction, in a manner similar to the case of using the yaw rate.

In the leaning vehicle running-state light-emitting device 20 according to this embodiment, the light emitter 22 only needs to emit light in real time corresponding to a leaning vehicle running-state class, and may emit light during turning or after turning.

INDUSTRIAL APPLICABILITY

The present teaching is applicable to a device that enables a user to visually recognize, in real time, a driving skill or the like obtained based on a running state, including a turning state, of the leaning vehicle 1.

DESCRIPTION OF REFERENCE CHARACTERS

1: leaning vehicle (motorcycle)
2: vehicle body
3: front wheel
4: rear wheel
5: body cover
6: handlebar
7a: front seat (seat)
7b: tandem seat (rear seat)
8: power unit
8a: engine
9: front fork
10: body frame
11: head pipe
12: steering shaft
13: brake
14: rear arm
15: front wheel cover
16: carriage
20: leaning vehicle running-state light-emitting device
21: case
21a: upper case
21b: lower case
21c: bottom plate
21d: front wall
22: light emitter
22a, 22b, 22c, 22d: light source
22e: LED holding plate
23: leaning vehicle running-state class data receiver
24: illumination controller
25, 26: battery
30: housing part
31: holding member
32: belt
40: information processor
41: leaning vehicle posture data detector
41a: gyro sensor
41b: acceleration sensor
42: leaning vehicle running-state class data generator

## Claims

**1.** A leaning vehicle running-state light-emitting device (20) configured to emit light corresponding to a leaning vehicle running-state class, the leaning vehicle running-state light-emitting device (20) comprising:

a case (21) disposable on a vehicle body (2) of a leaning vehicle (1) and locatable at the rear of a driver seated on a seat (7a) of the leaning vehicle (1);
a light emitter (22) housed in the case (21) and including a light source (22a - 22d) ;
a leaning vehicle running-state class data receiver (23) which is housed in the case (21) and to which leaning vehicle running-state class data is input, the leaning vehicle running-state class data being obtained by classifying data concerning a running state, including a turning state, of the leaning vehicle (1) into a plurality of running state classes; and
an illumination controller (24) housed in the case (21) and configured to control illumination of the light source (22a - 22d) based on the leaning vehicle running-state class data input to the leaning vehicle running-state class data receiver (23) during traveling of the leaning vehicle 81); **characterised in that**

the light source is configured to emit light at least in the left, right and rear directions with respect to the leaning vehicle (1).

2. The leaning vehicle running-state light-emitting device (20) configured to emit light corresponding to a leaning vehicle running-state class according to claim 1, further comprising:

a leaning vehicle posture data detector (41) configured to detect, as leaning vehicle posture data, at least one of a physical quantity related to a yaw angle, a physical quantity related to a roll angle, or a physical quantity related to a pitch angle in the leaning vehicle (1), while the leaning vehicle (1) is running; and
a leaning vehicle running-state class data generator (42) configured to generate the leaning vehicle running-state class data obtained by classifying data concerning the running state, including the turning state, of the leaning vehicle (1) into a plurality of leaning vehicle running-state classes, based on the leaning vehicle posture data detected by the leaning vehicle posture data detector (41), wherein
the leaning vehicle running-state class data generated by the leaning vehicle running-state class data generator (42) is input to the leaning vehicle running-state class data receiver (23).

3. The leaning vehicle running-state light-emitting device (20) configured to emit light corresponding to a leaning vehicle running-state class according to claim 2, wherein
the leaning vehicle running-state class data generator (42) is configured to determine a driving skill based on the leaning vehicle posture data detected by the leaning vehicle posture data detector (41), and to classify the determined driving skill into a plurality of leaning vehicle running-state classes based on a driving determination criterion to thereby generate the leaning vehicle running-state class data.

4. The leaning vehicle running-state light-emitting device (20) configured to emit light corresponding to a leaning vehicle running-state class according to claim 3, wherein
the leaning vehicle running-state class data generator (42) is configured to obtain at least one of a smooth movement degree or a nimble movement degree based on the leaning vehicle posture data detected by the leaning vehicle posture data detector (41), determines a driving skill based on the obtained degree, and classifies the determined driving skill into a plurality of leaning vehicle running-state classes based on a driving determination criterion to thereby generate the leaning vehicle running-state class data.

5. The leaning vehicle running-state light-emitting device (20) configured to emit light corresponding to a leaning vehicle running-state class according to any one of claims 1 to 4, wherein
the illumination controller (24) is configured to change a light-emission mode of the light source (22a - 22d) of the light emitter (22) based on the leaning vehicle running-state class data.

6. The leaning vehicle running-state light-emitting device (20) configured to emit light corresponding to a leaning vehicle running-state class according to claim 5, wherein
the illumination controller (24) is configured to change a color of visible light emitted from the light source (22a - 22d) of the light emitter (22) to thereby change a light-emission mode of the light source (22a - 22d) of the light emitter (22).

7. The leaning vehicle running-state light-emitting device (20) configured to emit light corresponding to a leaning vehicle running-state class according to claim 6, wherein

the light emitter (22) includes a plurality of light sources (22a - 22d) configured to emit visible light of different colors, and
the illumination controller (24) is configured to select one of the plurality of light sources (22a - 22d) that is configured to emit light, based on the leaning vehicle running-state class data.

8. The leaning vehicle running-state light-emitting device (20) configured to emit light corresponding to a leaning vehicle running-state class according to any one of claims 2 to 7, wherein
the case (21) includes a detector housing part (30) configured to house the leaning vehicle posture data detector (41).

9. The leaning vehicle running-state light-emitting device (20) configured to emit light corresponding to a leaning vehicle running-state class according to any one of claims 1 to 8, further comprising:

a holding member (31) locatable between a rear seat (7b) and the case (21) and having a rigidity higher than a rigidity of the rear seat (7b), the rear seat (7b) being disposed on the vehicle body (2) at the rear of the seat (7a); and
the case (21) is attachable to the rear seat (7b) to be above the rear seat (7b), with the holding member (31) interposed between the case (21) and the rear seat (7b).

**Patentansprüche**

1. Eine Neigungsfahrzeug-Laufzustand-Lichtemissionsvorrichtung (20), die dazu ausgebildet ist, Licht, das einer Neigungsfahrzeug-Laufzustandsklasse entspricht, zu emittieren, wobei die Neigungsfahrzeug-Laufzustand-Lichtemissionsvorrichtung (20) folgende Merkmale aufweist:

ein Gehäuse (21), das an einem Fahrzeugkörper (2) eines Neigungsfahrzeugs (1) angeordnet sein kann und hinter einem Fahrer positioniert sein kann, der auf einem Sitz (7a) des Neigungsfahrzeugs (1) sitzt;
einen Lichtemitter (22), der in dem Gehäuse (21) untergebracht ist und eine Lichtquelle (22a-22d) umfasst;
einen Neigungsfahrzeug-Laufzustandsklassendaten-Empfänger (23), der in dem Gehäuse (21) untergebracht ist und in den Neigungsfahrzeug-Laufzustandsklassendaten eingegeben werden, wobei die Neigungsfahrzeug-Laufzustandsklassendaten erhalten werden durch Klassifizieren von Daten im Hinblick auf einen Laufzustand, einschließlich Abbiegezustand, des Neigungsfahrzeugs (1) in eine Mehrzahl von Laufzustandsklassen; und
eine Beleuchtungssteuerung (24), die in dem Gehäuse (21) untergebracht und dazu ausgebildet ist, eine Beleuchtung der Lichtquelle (22a-22d) basierend auf den Neigungsfahrzeug-Laufzustandsklassendaten zu steuern, die in den Neigungsfahrzeug-Laufzustandsklassendaten-Empfänger (23) eingegeben werden, während eines Bewegens des Neigungsfahrzeugs (81); **dadurch gekennzeichnet, dass**
die Lichtquelle dazu ausgebildet ist, Licht zumindest in der Links-, Rechts- und Rückrichtung in Bezug auf das Neigungsfahrzeug (1) zu emittieren.

2. Die Neigungsfahrzeug-Laufzustand-Lichtemissionsvorrichtung (20), die dazu ausgebildet ist, Licht, das einer Neigungsfahrzeug-Laufzustandsklasse entspricht, zu emittieren, gemäß Anspruch 1, die ferner folgende Merkmale aufweist:

einen Neigungsfahrzeug-Haltungsdaten-Detektor (41), der dazu ausgebildet ist, als Neigungsfahrzeug-Haltungsdaten zumindest ein Element einer physikalischen Größe in Bezug auf einen Gierwinkel, einer physikalischen Größe in Bezug auf einen Rollwinkel oder einer physikalischen Größe in Bezug auf einen Stampfwinkel in dem Neigungsfahrzeug (1) zu erfassen, während das Neigungsfahrzeug (1) läuft, und
einen Neigungsfahrzeug-Laufzustandsklassendaten-Erzeuger (42), der dazu ausgebildet ist, die Neigungsfahrzeug-Laufzustandsklassendaten, die erhalten werden durch Klassifizieren von Daten im Hinblick auf den Laufzustand, einschließlich des Abbiegezustands, des Neigungsfahrzeugs (1) in eine Mehrzahl von Neigungsfahrzeug-Laufzustandsklassen, basierend auf den Neigungsfahrzeug-Haltungsdaten zu erzeugen, die durch den Neigungsfahrzeug-Haltungsdaten-Detektor (41) erfasst werden, wobei
die Neigungsfahrzeug-Laufzustandsklassendaten, die durch den Neigungsfahrzeug-Laufzustandsklassendaten-Erzeuger (42) erzeugt werden, in den Neigungsfahrzeug-Laufzustandsklassendaten-Empfänger (23) eingegeben werden.

3. Die Neigungsfahrzeug-Laufzustand-Lichtemissionsvorrichtung (20), die dazu ausgebildet ist, Licht, das einer Neigungsfahrzeug-Laufzustandsklasse entspricht, zu emittieren, gemäß Anspruch 2, bei der
der Neigungsfahrzeug-Laufzustandsklassendaten-Erzeuger (42) dazu ausgebildet ist, ein Fahrgeschick basierend auf den Neigungsfahrzeug-Haltungsdaten zu bestimmen, die durch den Neigungsfahrzeug-Haltungsdaten-Detektor (41) erfasst werden, und das bestimmte Fahrgeschick basierend auf einem Fahrbestimmungskriterium in eine Mehrzahl von Neigungsfahrzeug-Laufzustandsklassen zu klassifizieren, um dadurch die Neigungsfahrzeug-Laufzustandsklassendaten zu erzeugen.

4. Die Neigungsfahrzeug-Laufzustand-Lichtemissionsvorrichtung (20), die dazu ausgebildet ist, Licht, das einer Neigungsfahrzeug-Laufzustandsklasse entspricht, zu emittieren, gemäß Anspruch 3, bei der
der Neigungsfahrzeug-Laufzustandsklassendaten-Erzeuger (42) dazu ausgebildet ist, zumindest ein Element eines gleichmäßigen Bewegungsgrads oder eines agilen Bewegungsgrads basierend auf den Neigungsfahrzeug-Haltungsdaten zu erhalten, die durch den Neigungsfahrzeug-Haltungsdaten-Detektor (41) erfasst werden, bestimmt ein Fahrgeschick basierend auf dem erhaltenen Grad und klassifiziert das bestimmte Fahrgeschick basierend auf einem Fahrbestimmungskriterium in eine Mehrzahl von Neigungsfahrzeug-Laufzustandsklassen, um dadurch die Neigungsfahrzeug-Laufzustandsklassendaten zu erzeugen.

**5.** Die Neigungsfahrzeug-Laufzustand-Lichtemissionsvorrichtung (20), die dazu ausgebildet ist, Licht, das einer Neigungsfahrzeug-Laufzustandsklasse entspricht, zu emittieren, gemäß einem der Ansprüche 1 bis 4, bei der
die Beleuchtungssteuerung (24) dazu ausgebildet ist, einen Lichtemissionsmodus der Lichtquelle (22a-22d) des Lichtemitters (22) basierend auf den Neigungsfahrzeug-Laufzustandsklassendaten zu ändern.

**6.** Die Neigungsfahrzeug-Laufzustand-Lichtemissionsvorrichtung (20), die dazu ausgebildet ist, Licht, das einer Neigungsfahrzeug-Laufzustandsklasse entspricht, zu emittieren, gemäß Anspruch 5, bei der
die Beleuchtungssteuerung (24) dazu ausgebildet ist, eine Farbe sichtbaren Lichts, das aus der Lichtquelle (22a-22d) des Lichtemitters (22) emittiert wird, zu ändern, um dadurch einen Lichtemissionsmodus der Lichtquelle (22a-22d) des Lichtemitters (22) zu ändern.

**7.** Die Neigungsfahrzeug-Laufzustand-Lichtemissionsvorrichtung (20), die dazu ausgebildet ist, Licht, das einer Neigungsfahrzeug-Laufzustandsklasse entspricht, zu emittieren, gemäß Anspruch 6, bei der

der Lichtemitter (22) eine Mehrzahl von Lichtquellen (22a-22d) aufweist, die dazu ausgebildet sind, sichtbares Licht in unterschiedlichen Farben zu emittieren, und
die Beleuchtungssteuerung (24) dazu ausgebildet ist, eine der Mehrzahl von Lichtquellen (22a-22d), die dazu ausgebildet ist, Licht zu emittieren, basierend auf den Neigungsfahrzeug-Laufzustandsklassendaten auszuwählen.

**8.** Die Neigungsfahrzeug-Laufzustand-Lichtemissionsvorrichtung (20), die dazu ausgebildet ist, Licht, das einer Neigungsfahrzeug-Laufzustandsklasse entspricht, zu emittieren, gemäß einem der Ansprüche 2 bis 7, bei der
das Gehäuse (21) einen Detektorhäusungsteil (30) aufweist, der dazu ausgebildet ist, den Neigungsfahrzeug-Haltungsdaten-Detektor (41) unterzubringen.

**9.** Die Neigungsfahrzeug-Laufzustand-Lichtemissionsvorrichtung (20), die dazu ausgebildet ist, Licht, das einer Neigungsfahrzeug-Laufzustandsklasse entspricht, zu emittieren, gemäß einem der Ansprüche 1 bis 8, die ferner folgendes Merkmal aufweist:

ein Haltebauteil (31), das zwischen einem Rücksitz (7b) und dem Gehäuse (21) angeordnet sein kann und eine Starrheit aufweist, die höher ist als eine Starrheit des Rücksitzes (7b), wobei der Rücksitz (7b) an dem Fahrzeugkörper (2) hinter dem Sitz (7a) angeordnet ist; und
das Gehäuse (21) so an dem Rücksitz (7b) angebracht sein kann, dass es oberhalb des Rücksitzes (7b) liegt, wobei das Haltebauteil (31) zwischen dem Gehäuse (21) und dem Rücksitz (7b) angeordnet ist.

## Revendications

**1.** Dispositif électroluminescent d'état de circulation de véhicule à inclinaison (20) configuré pour émettre de la lumière correspondant à une classe d'état de circulation de véhicule à inclinaison, le dispositif électroluminescent d'état de circulation de véhicule à inclinaison (20) comprenant:

un boîtier (21) pouvant être arrangé sur une carrosserie de véhicule (2) d'un véhicule à inclinaison (1) et pouvant être placé à l'arrière d'un conducteur assis sur un siège (7a) du véhicule à inclinaison (1);
un émetteur de lumière (22) logé dans le boîtier (21) et comportant une source de lumière (22a à 22d);
un récepteur de données de classe d'état de circulation de véhicule à inclinaison (23) qui est logé dans le boîtier (21) et dans lequel sont entrées les données de classe d'état de circulation de véhicule à inclinaison, les données de classe d'état de circulation de véhicule à inclinaison étant obtenues en classifiant les données concernant un état de circulation, y compris un état de virage, du véhicule à inclinaison (1) en une pluralité de classes d'état de circulation; et
un moyen de commande d'éclairage (24) logé dans le boîtier (21) et configuré pour commander l'éclairage de la source de lumière (22a à 22d) sur base des données de classe d'état de circulation du véhicule à inclinaison entrées dans le récepteur de données de classe d'état de circulation de véhicule à inclinaison (23) pendant le déplacement du véhicule à inclinaison (81); **caractérisé par le fait que**
la source de lumière est configurée pour émettre de la lumière au moins dans les directions vers la gauche, vers la droite et vers l'arrière par rapport au véhicule à inclinaison (1).

2. Dispositif électroluminescent d'état de circulation de véhicule à inclinaison (20) configuré pour émettre de la lumière correspondant à une classe d'état de circulation de véhicule à inclinaison selon la revendication 1, comprenant par ailleurs:

un détecteur de données de position de véhicule à inclinaison (41) configuré pour détecter, comme données de position de véhicule à inclinaison, au moins l'une parmi une quantité physique relative à un angle de lacet, une quantité physique relative à un angle de roulis ou une quantité physique relative à un angle de tangage dans le véhicule à inclinaison (1) tandis que le véhicule à inclinaison (1) est en circulation; et
un générateur de données de classe d'état de circulation de véhicule à inclinaison (42) configuré pour générer les données de classe d'état de circulation de véhicule à inclinaison obtenues en classifiant les données concernant l'état de circulation, y compris l'état de virage, du véhicule à inclinaison (1) en une pluralité de classes d'état de circulation de véhicule à inclinaison, sur base des données de posture de véhicule à inclinaison détectées par le détecteur de données de posture de véhicule à inclinaison (41), dans lequel
les données de classe d'état de circulation de véhicule à inclinaison générées par le générateur de données de classe d'état de circulation de véhicule à inclinaison (42) sont entrées dans le récepteur de données de classe d'état de circulation de véhicule à inclinaison (23).

3. Dispositif électroluminescent d'état de circulation de véhicule à inclinaison (20) configuré pour émettre de la lumière correspondant à une classe d'état de circulation de véhicule à inclinaison selon la revendication 2, dans lequel
le générateur de données de classe d'état de circulation de véhicule à inclinaison (42) est configuré pour déterminer une compétence de conduite sur base des données de posture de véhicule à inclinaison détectées par le détecteur de données de posture de véhicule à inclinaison (41), et pour classifier la compétence de conduite déterminée en une pluralité de des classes d'état de circulation de véhicule sur base d'un critère de détermination de conduite pour générer ainsi les données de classe d'état de circulation de véhicule à inclinaison.

4. Dispositif électroluminescent d'état de circulation de véhicule à inclinaison (20) configuré pour émettre de la lumière correspondant à une classe d'état de circulation de véhicule à inclinaison selon la revendication 3, dans lequel
le générateur de données de classe d'état de circulation de véhicule à inclinaison (42) est configuré pour obtenir au moins l'un parmi un degré de mouvement régulier ou d'un degré de mouvement agile sur base des données de position de véhicule à inclinaison détectées par le détecteur de données de position de véhicule à inclinaison (41), détermine une compétence de conduite sur base du degré obtenu, et classifie la compétence de conduite déterminée en une pluralité de classes d'état de circulation de véhicule à inclinaison sur base d'un critère de détermination de conduite pour générer ainsi les données de classe d'état de circulation de véhicule à inclinaison.

5. Dispositif électroluminescent d'état de circulation de véhicule à inclinaison (20) configuré pour émettre de la lumière correspondant à une classe d'état de circulation de véhicule à inclinaison selon l'une quelconque des revendications 1 à 4, dans lequel
le moyen de commande d'éclairage (24) est configuré pour changer un mode d'émission de lumière de la source de lumière (22a à 22d) de l'émetteur de lumière (22) sur base des données de classe d'état de circulation du véhicule à inclinaison.

6. Dispositif électroluminescent d'état de circulation de véhicule à inclinaison (20) configuré pour émettre de la lumière correspondant à une classe d'état de circulation de véhicule à inclinaison selon la revendication 5, dans lequel
le moyen de commande d'éclairage (24) est configuré pour changer une couleur de lumière visible émise par la source de lumière (22a à 22d) de l'émetteur de lumière (22) pour changer ainsi un mode d'émission de lumière de la source de lumière (22a à 22d) de l'émetteur de lumière (22).

7. Dispositif électroluminescent d'état de circulation de véhicule à inclinaison (20) configuré pour émettre de la lumière correspondant à une classe d'état de circulation de véhicule à inclinaison selon la revendication 6, dans lequel

l'émetteur de lumière (22) comporte une pluralité de sources de lumière (22a à 22d) configurées pour émettre de la lumière visible de différentes couleurs, et
le moyen de commande d'éclairage (24) est configuré pour sélectionner l'une parmi la pluralité de sources de lumière (22a à 22d) qui est configurée pour émettre de la lumière, sur base des données de classe d'état de circulation du véhicule à inclinaison,

**8.** Dispositif électroluminescent d'état de circulation de véhicule à inclinaison (20) configuré pour émettre de la lumière correspondant à une classe d'état de circulation de véhicule à inclinaison selon l'une quelconque des revendications 2 à 7, dans lequel
le boîtier (21) comporte une partie de logement de détecteur (30) configurée pour loger le détecteur de données de position de véhicule à inclinaison (41).

**9.** Dispositif électroluminescent d'état de circulation de véhicule à inclinaison (20) configuré pour émettre de la lumière correspondant à une classe d'état de circulation de véhicule à inclinaison selon l'une quelconque des revendications 1 à 8, comprenant par ailleurs:

un élément de support (31) pouvant être placé entre un siège arrière (7b) et le boîtier (21) et présentant une rigidité supérieure à une rigidité du siège arrière (7b), le siège arrière (7b) étant disposé sur la carrosserie de véhicule (2) à l'arrière du siège (7a); et
le boîtier (21) peut être fixé au siège arrière (7b) de manière à se situer au-dessus du siège arrière (7b), avec l'élément de support (31) interposé entre le boîtier (21) et le siège arrière (7b).

FIG. 1

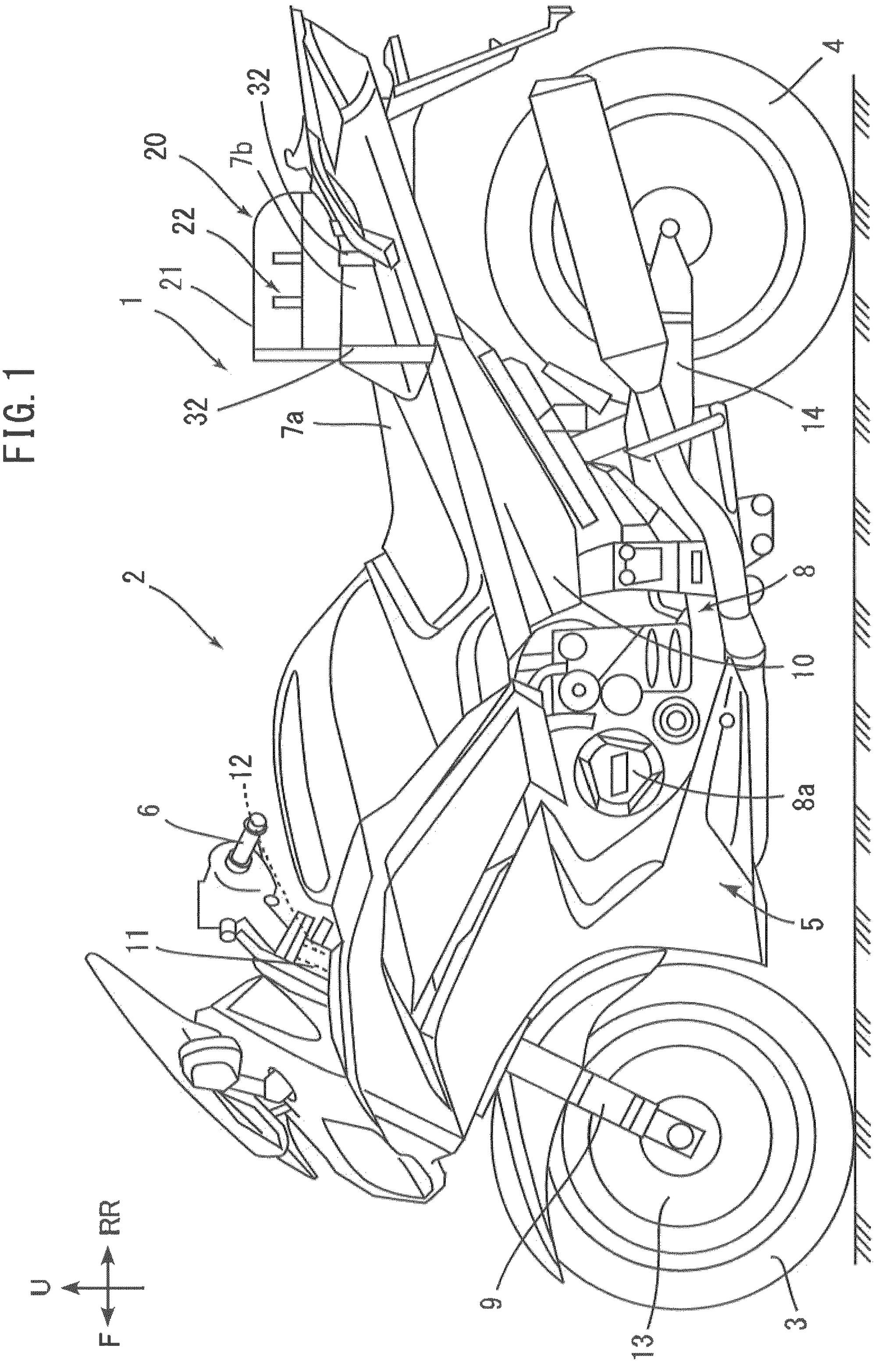

FIG. 2

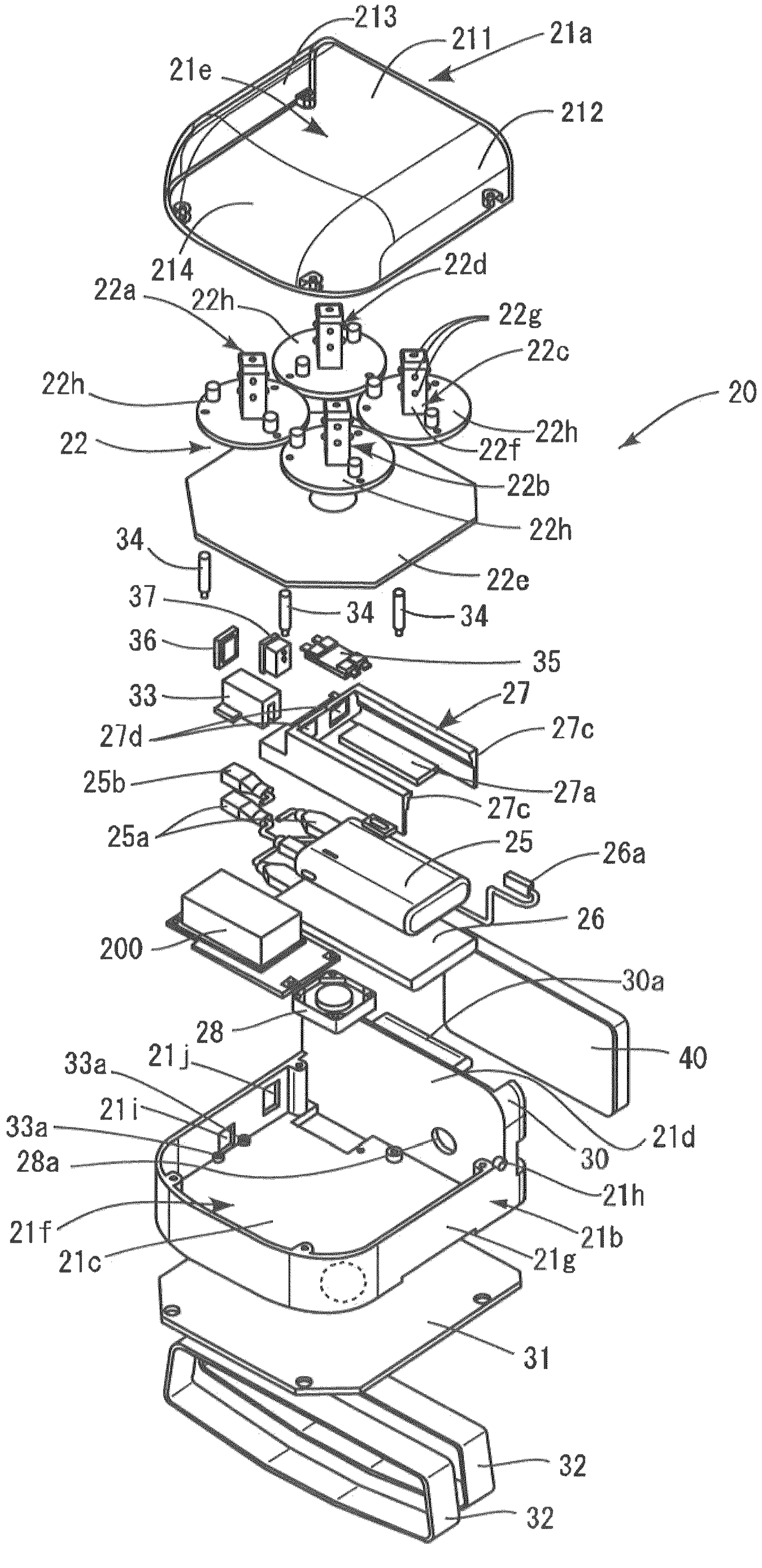
213
211
21a
21e
212
214
22d
22a
22h
22g
22c
22h
20
22h
22f
22
22b
22h
34
22e
37
34
34
36
35
33
27
27d
27c
27a
25b
27c
25a
25
26a
26
200
30a
28
40
33a
21j
21i
33a
21d
30
28a
21h
21f
21b
21c
21g
31
32
32

FIG. 3

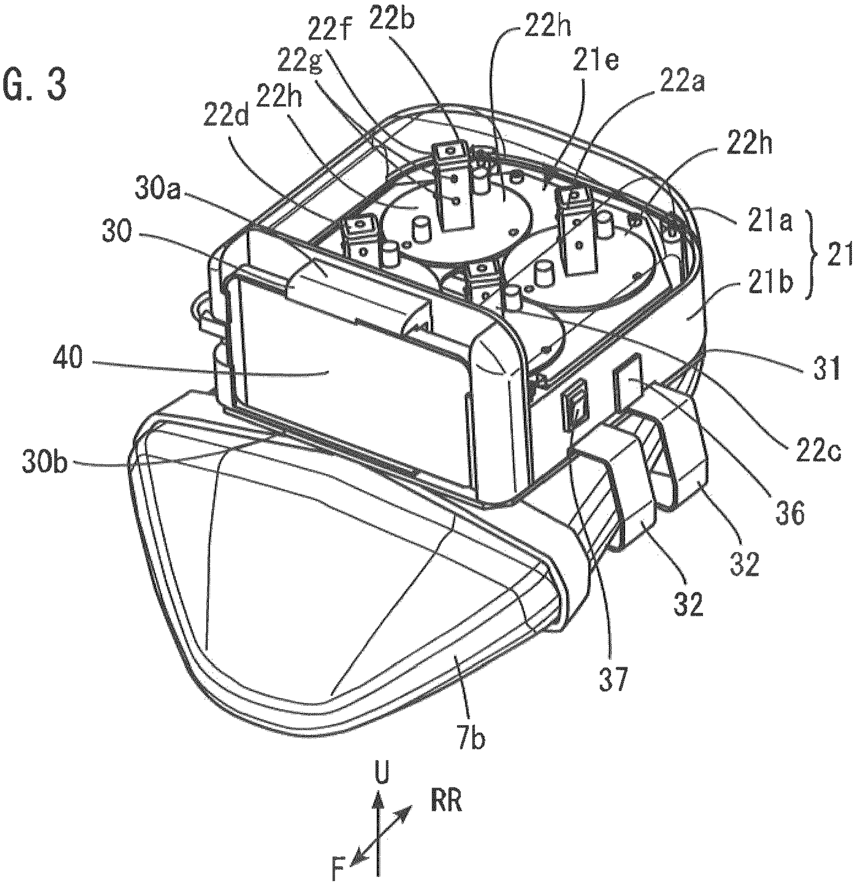
22f
22b
22h
21e
22a
22g
22d
22h
22h
30a
21a
21
30
21b
40
31
30b
22c
36
32
32
37
7b
U
RR
F

FIG. 4

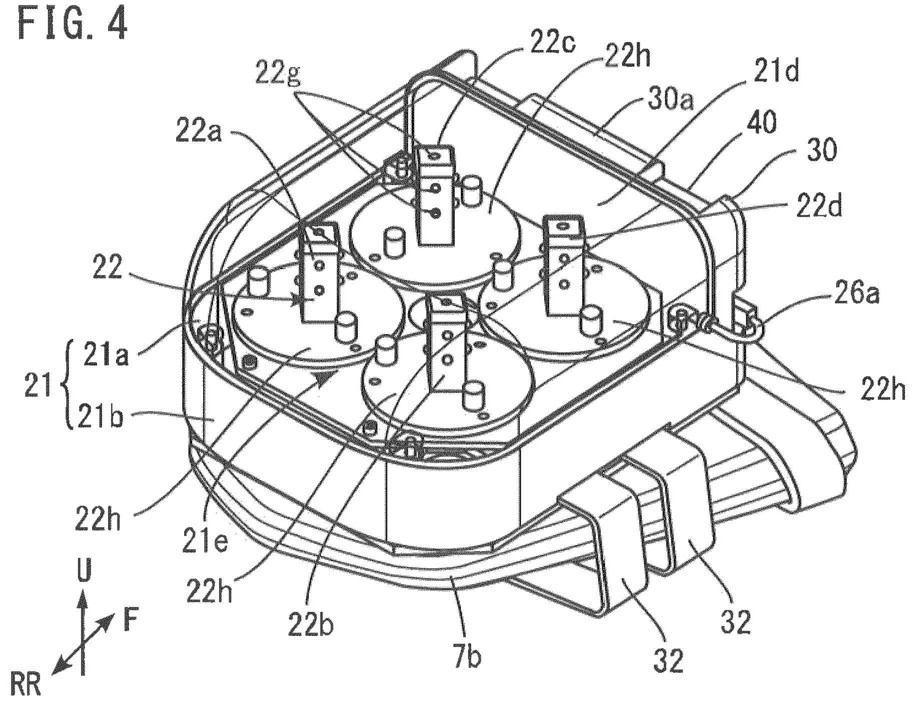
22c
22h
21d
22g
30a
22a
40
30
22d
22
26a
21
21a
21b
22h
22h
21e
22h
22b
7b
32
32
U
F
RR

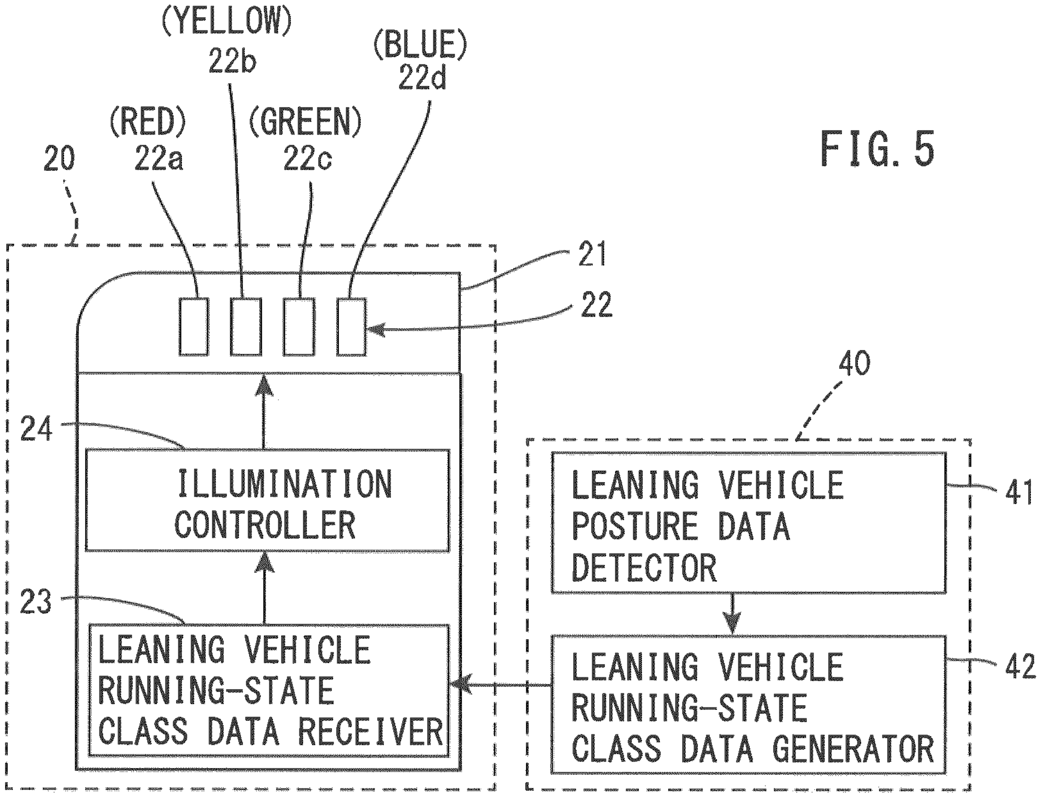
(YELLOW)
22b
(BLUE)
22d
(RED)
22a
(GREEN)
22c
20
21
22
40
24
ILLUMINATION CONTROLLER
23
LEANING VEHICLE RUNNING-STATE CLASS DATA RECEIVER
LEANING VEHICLE POSTURE DATA DETECTOR
41
LEANING VEHICLE RUNNING-STATE CLASS DATA GENERATOR
42

FIG. 5

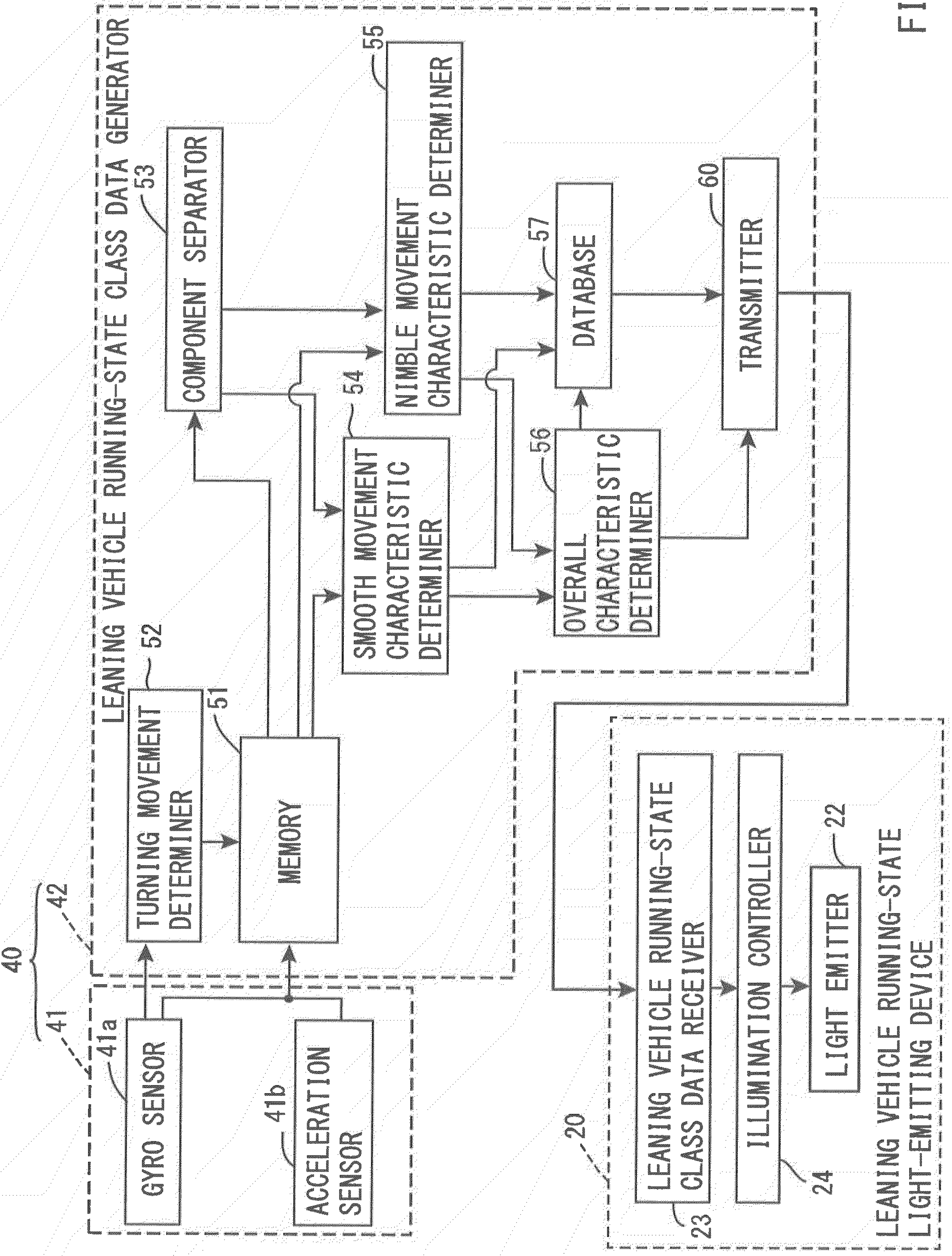
LEANING VEHICLE RUNNING-STATE CLASS DATA GENERATOR
COMPONENT SEPARATOR
53
NIMBLE MOVEMENT CHARACTERISTIC DETERMINER
55
DATABASE
57
TRANSMITTER
60
SMOOTH MOVEMENT CHARACTERISTIC DETERMINER
54
OVERALL CHARACTERISTIC DETERMINER
56
TURNING MOVEMENT DETERMINER
52
MEMORY
51
40
42
41
41a
GYRO SENSOR
41b
ACCELERATION SENSOR
LEANING VEHICLE RUNNING-STATE CLASS DATA RECEIVER
23
ILLUMINATION CONTROLLER
24
LIGHT EMITTER
22
LEANING VEHICLE RUNNING-STATE LIGHT-EMITTING DEVICE
20

FIG. 6

FIG. 7

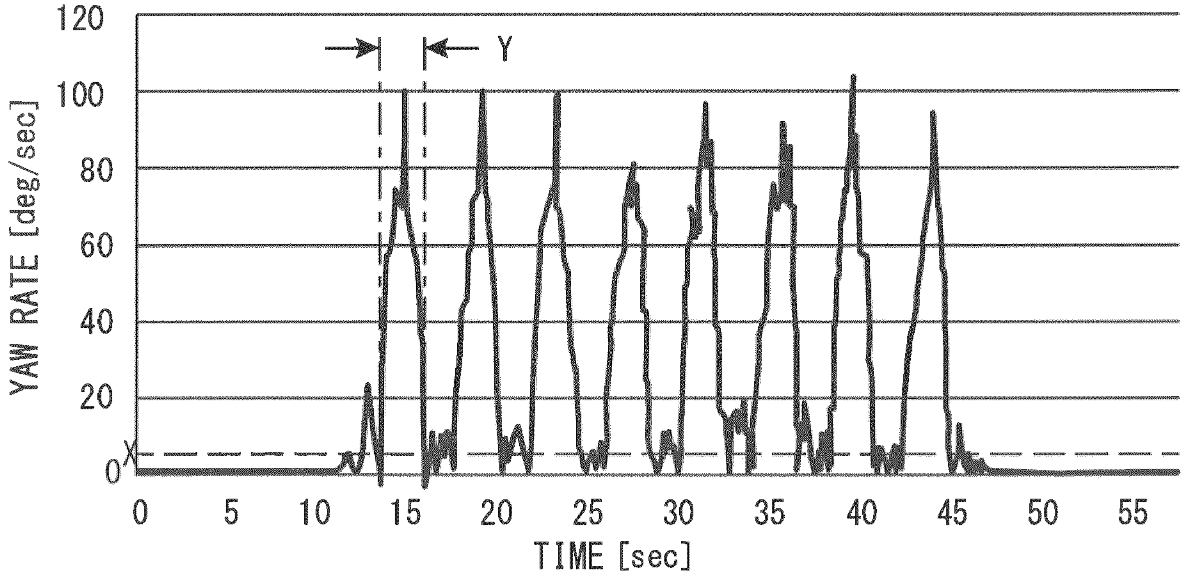
120
100
80
60
40
20
0
X
Y
YAW RATE [deg/sec]
0
5
10
15
20
25
30
35
40
45
50
55
TIME [sec]

FIG. 8

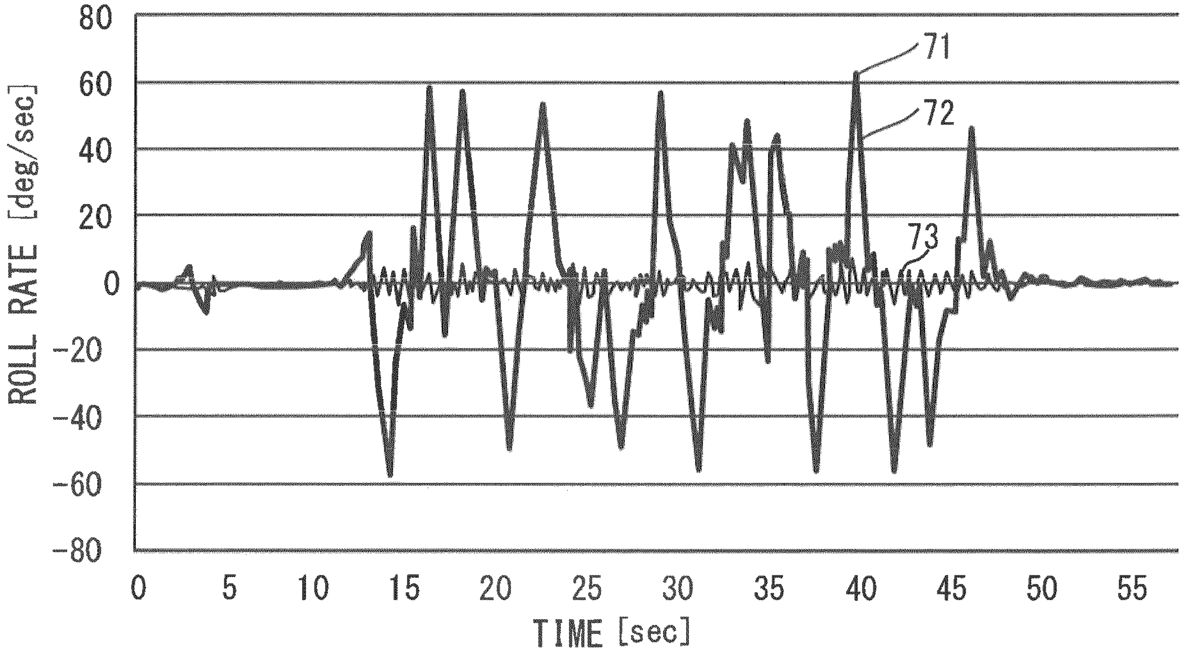
80
60
40
20
0
-20
-40
-60
-80
71
72
73
ROLL RATE [deg/sec]
0
5
10
15
20
25
30
35
40
45
50
55
TIME [sec]

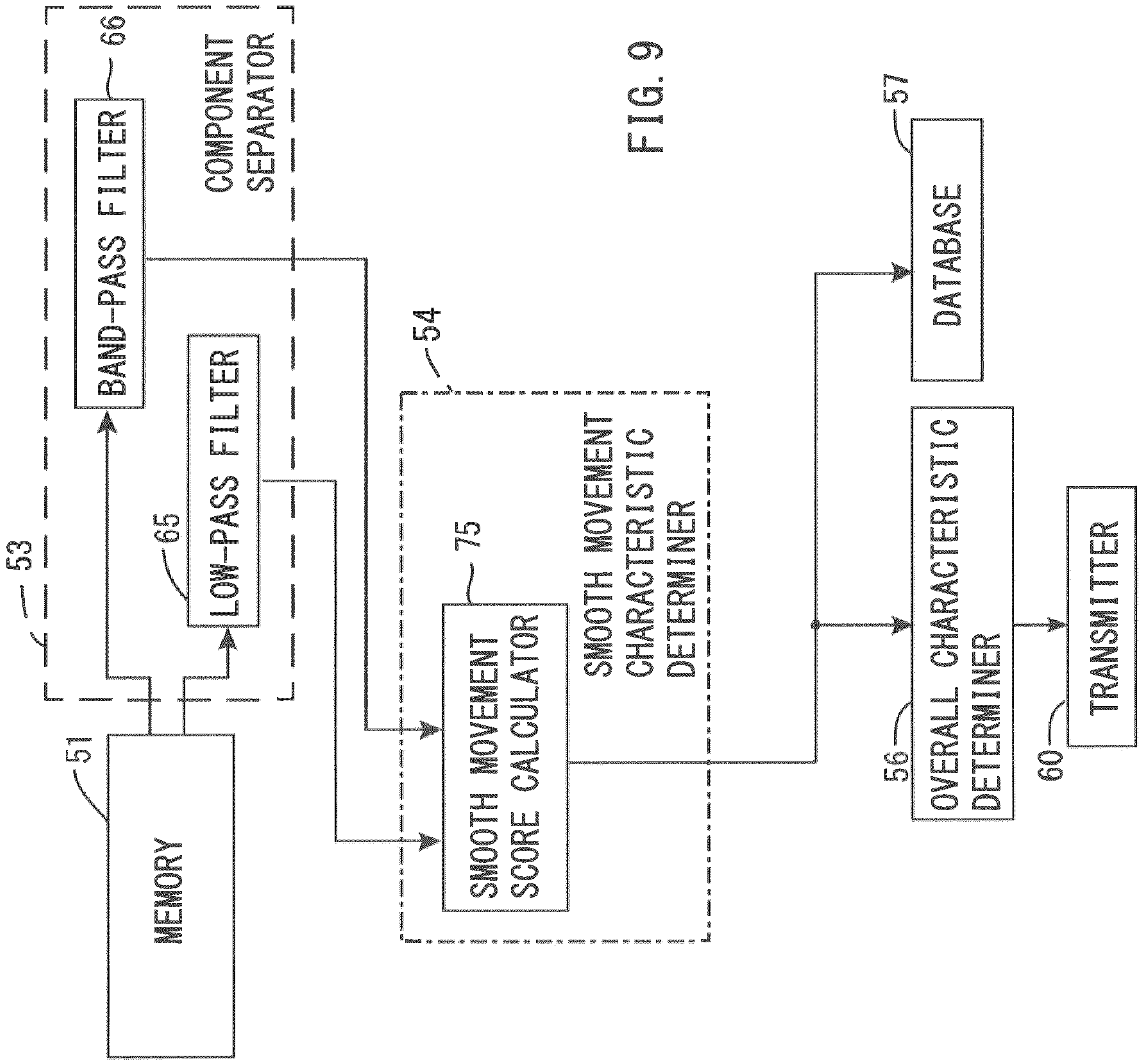
MEMORY
51
53
COMPONENT SEPARATOR
BAND-PASS FILTER
66
LOW-PASS FILTER
65
54
SMOOTH MOVEMENT CHARACTERISTIC DETERMINER
SMOOTH MOVEMENT SCORE CALCULATOR
75
DATABASE
57
OVERALL CHARACTERISTIC DETERMINER
56
TRANSMITTER
60

FIG. 9

FIG. 10

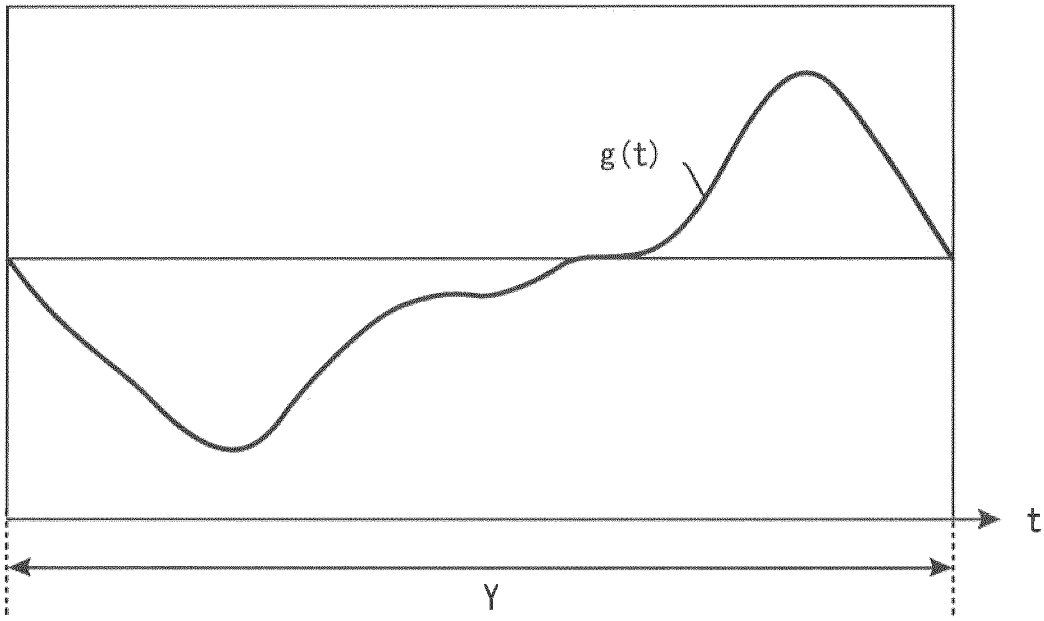


FIG. 11

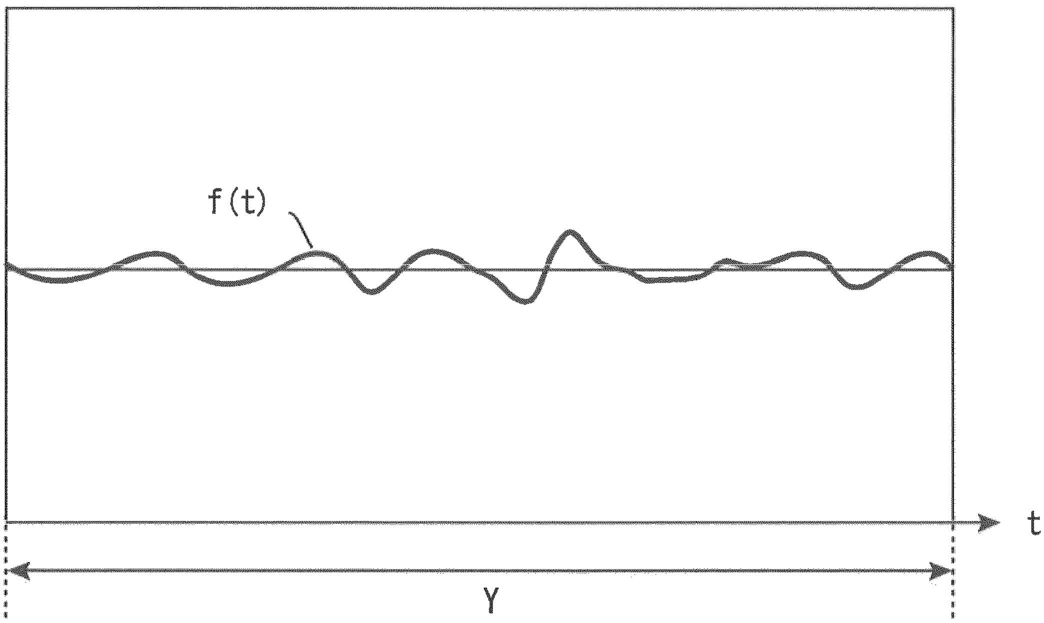

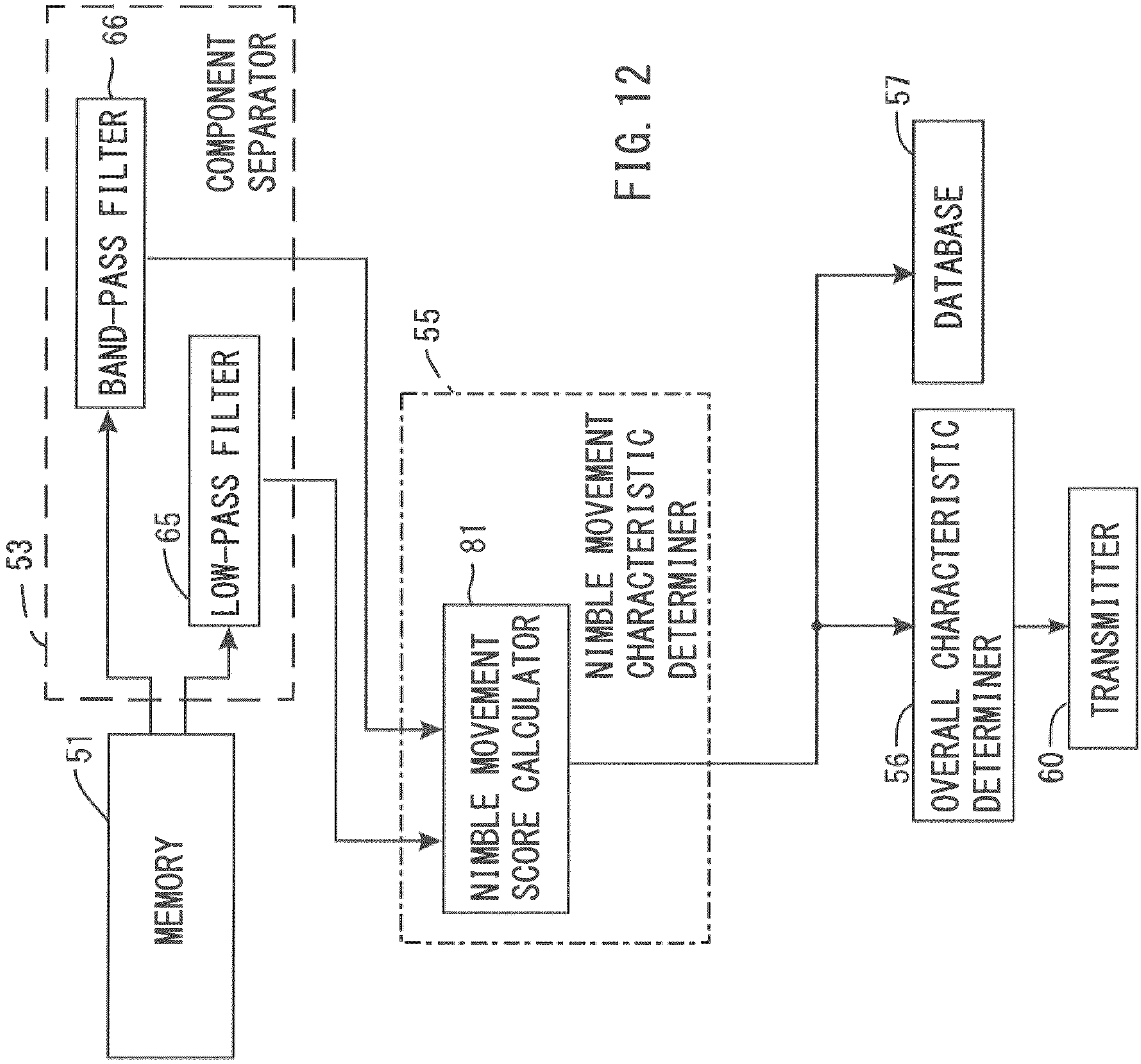
MEMORY
51
53
COMPONENT SEPARATOR
BAND-PASS FILTER
66
LOW-PASS FILTER
65
55
NIMBLE MOVEMENT CHARACTERISTIC DETERMINER
NIMBLE MOVEMENT SCORE CALCULATOR
81
DATABASE
57
OVERALL CHARACTERISTIC DETERMINER
56
TRANSMITTER
60
FIG. 12

FIG. 13

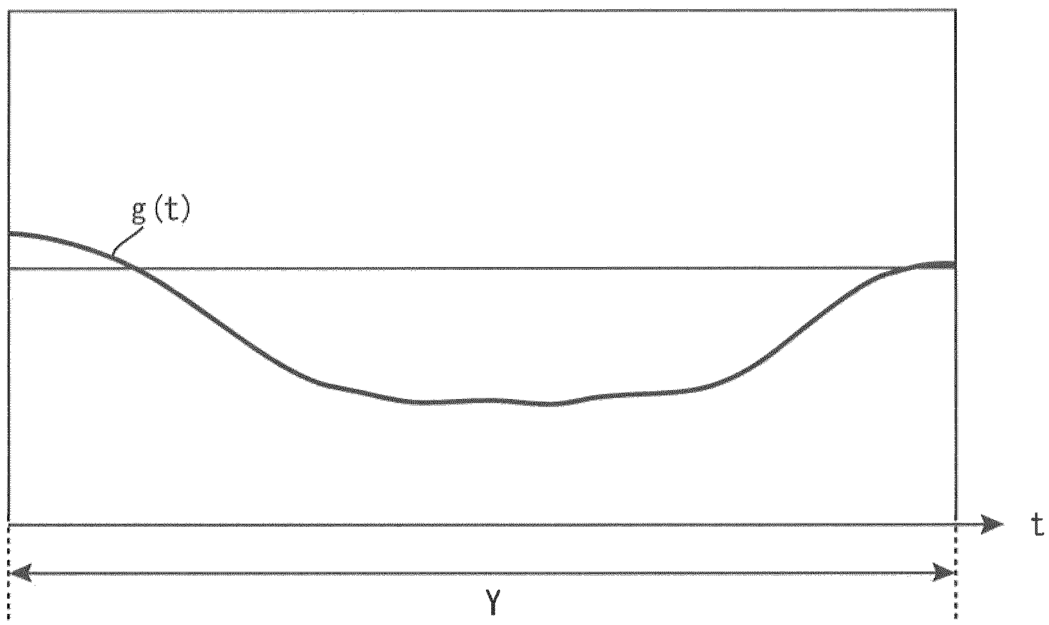

FIG. 14

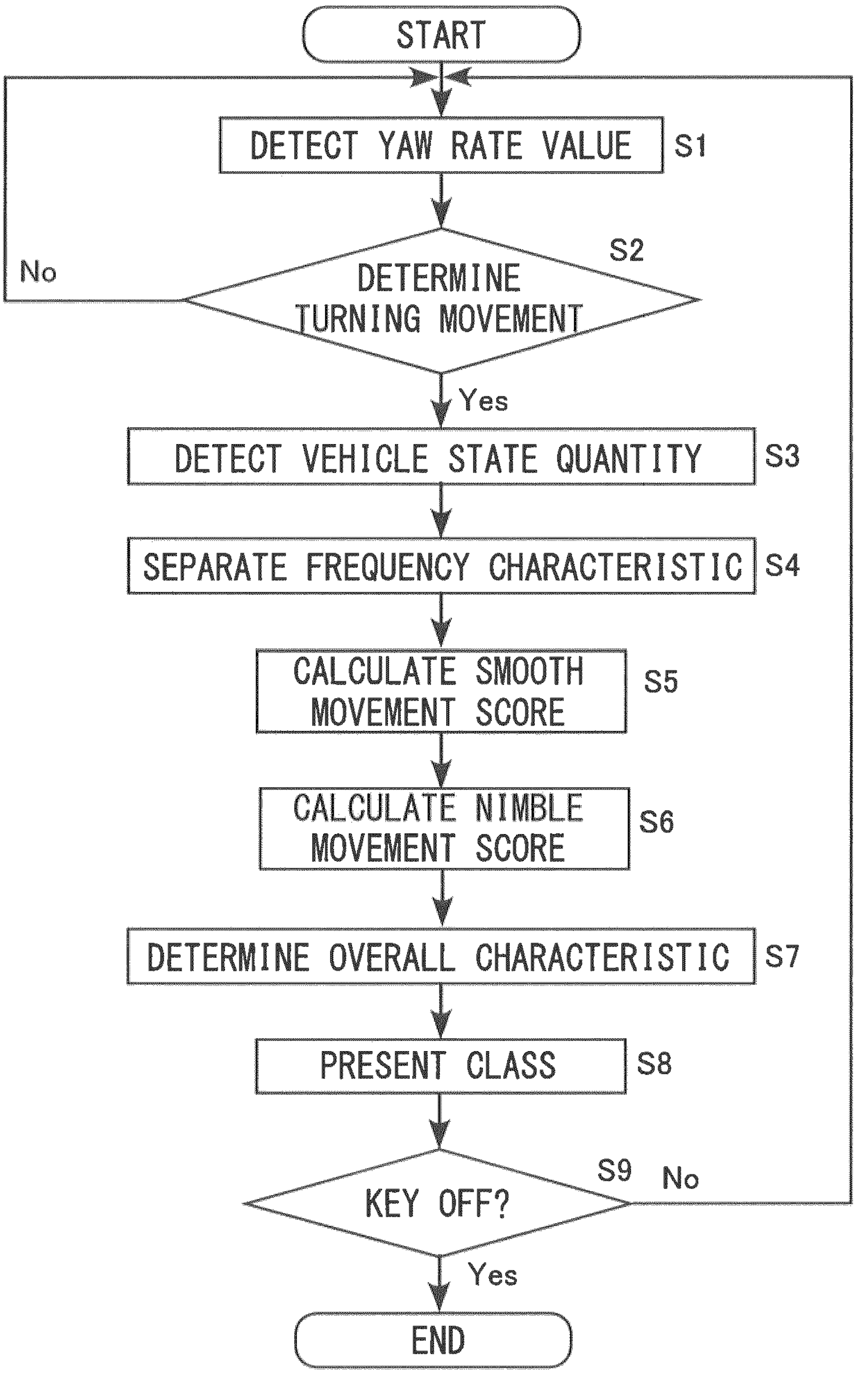
START
DETECT YAW RATE VALUE
S1
S2
DETERMINE TURNING MOVEMENT
No
Yes
DETECT VEHICLE STATE QUANTITY
S3
SEPARATE FREQUENCY CHARACTERISTIC
S4
CALCULATE SMOOTH MOVEMENT SCORE
S5
CALCULATE NIMBLE MOVEMENT SCORE
S6
DETERMINE OVERALL CHARACTERISTIC
S7
PRESENT CLASS
S8
KEY OFF?
S9
No
Yes
END

FIG. 15

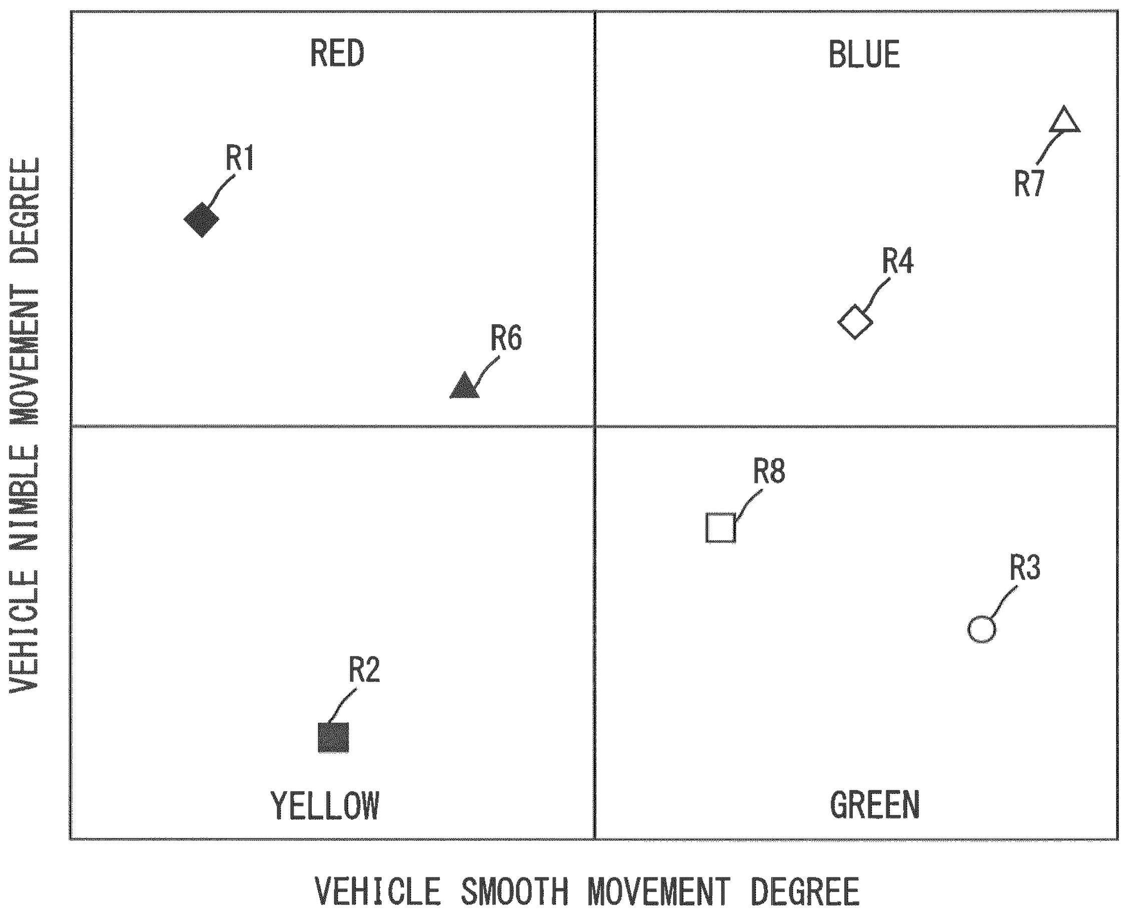
RED
BLUE
R1
R7
R4
R6
R8
R3
R2
YELLOW
GREEN
VEHICLE NIMBLE MOVEMENT DEGREE
VEHICLE SMOOTH MOVEMENT DEGREE

FIG. 16

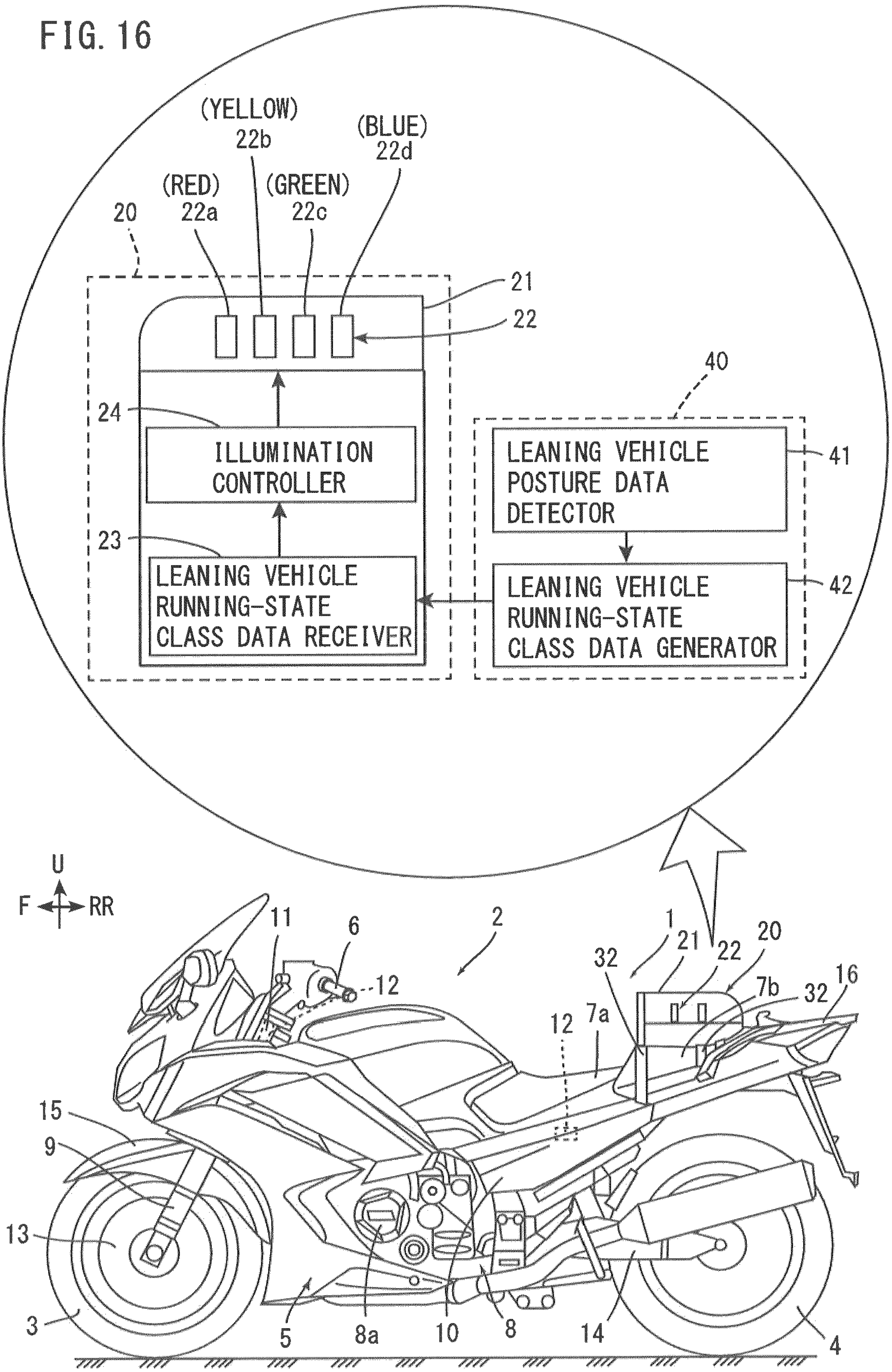
(YELLOW)
22b
(BLUE)
22d
(RED)
22a
(GREEN)
22c
20
21
22
40
24
ILLUMINATION CONTROLLER
LEANING VEHICLE POSTURE DATA DETECTOR
41
23
LEANING VEHICLE RUNNING-STATE CLASS DATA RECEIVER
LEANING VEHICLE RUNNING-STATE CLASS DATA GENERATOR
42
U
F
RR
11
6
12
2
1
21
22
20
32
7b
32
16
12
7a
15
9
13
3
5
8a
10
8
14
4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004021076 A
- EP 3219567 A1